# EUROPEAN PATENT SPECIFICATION

(11) **EP 3 679 850 B1**
(45) Date of publication and mention of the grant of the patent: **29.06.2022**
(21) Application number: 20160760.3
(22) Date of filing: 22.03.2016
(51) Int. Cl.: A47L 9/28

(54) **ROBOT CLEANER, ROBOT CLEANING SYSTEM HAVING THE SAME**
ROBOTERREINIGER, ROBOTERREINIGUNGSSYSTEM DAMIT
ROBOT NETTOYEUR, SYSTÈME DE NETTOYAGE ROBOTISÉ LE COMPRENANT

(30) Priority: 23.03.2015 KR 20150040090
(43) Date of publication of application: 15.07.2020
(62) Divisional of application: 18158645.4
(73) Proprietor: LG Electronics Inc., Seoul 07336 (KR)
(72) Inventor: SEO, Daegeun, Seoul 08592 (KR); LEE, Juwan, Seoul 08592 (KR); KIM, Lagyoung, Seoul 08592 (KR)
(74) Representative: Ter Meer Steinmeister & Partner

(56) References cited:
- WO-A1-2013/085085
- WO-A1-2014/196272
- DE-A1-102011 006 062
- DE-A1-102012 109 004
- US-A1- 2012 316 680
- US-A1- 2013 056 032

## Description

The invention relates to a robot cleaner which is also known as an automatic cleaner and to a method for operating the robot cleaner. Further it relates to a robot cleaning system having the same. In particular, it relates to a robot cleaner which may execute selective cleaning of foreign substances.

In general, cleaners are home appliances which remove foreign substances from the floor by suction. Recently, among cleaners, a cleaner which autonomously executes cleaning is referred to as a robot cleaner. Such a robot cleaner removes foreign substances from the floor by suction while traveling using driving force of a motor operated by a rechargeable battery. Robot cleaners facilitate the cleaning of apartments by automatically cleaning the floor without any interaction of the user. The robot cleaner is moved by a driving force of a motor operated by a battery to suction and remove a foreign substance from a floor. Generally, the robot cleaner includes a travelling device which is installed on a main body. The main body forms the outer appearance of the robot cleaner. The travelling device is adapted to move the robot cleaner in a predetermined direction through the apartment to allow the robot cleaner to suction a foreign substance from a floor. The robot cleaner includes at least one suction port which is disposed on the bottom of the main body to suction any foreign substance from the floor. Usually, the robot cleaner includes a main brush, which directly contacts the floor during rotating the main brush and transports the foreign substance to the suction port for being introduced through the suction port.

Additionally, a robot cleaner may further include a side brush assembly for corner-cleaning and for adapted cleaning operations in predetermined circumstances. By using a side brush assembly it is possible to transport or move a foreign substance which is not located under the main body to the suction port to thereby increasing the area of cleaning without fully covering the area with the main body of the robot cleaner for cleaning. The side-brush assembly may rotate relative to the main body to move foreign substance located at the outside of the main body toward the suction port.

US 2014/207280 A1 describes a computer-implemented method for receiving user commands for a remote cleaning robot and sending the user commands to the remote cleaning robot. US 2013/056032 A1 describes a robot cleaner which is accessed to a terminal through a network. EP 2 508 957 A2 describes a robot cleaner, and remote controlling system and method of the robot cleaner.

WO 2013/085085 A1 relates to an automatic moving apparatus which includes: a storage unit configured to store a traveling method; an image detection unit configured to acquire a captured image; a driving unit having one or more wheels and driving the wheels according to a driving signal; and a control unit configured to extract a traveling direction from the traveling method stored in the storage unit in a first mode, extract a traveling direction indicated by a sensing target from the captured image acquired by the image detection unit in a second mode, and generate a driving signal for moving the automatic moving apparatus in the extracted traveling direction.

Since robot cleaners are mostly operated when the user is not present and has left the apartment, there might be situations, where an automatic cleaning of the floor is not desired by the user.

Such situations might appear if the cleaner is moving in the kids room and is detecting any small toys. Another situation which should be avoided, is, if any pets are living in the apartment and if the pet loses some excrement or foreign material (pee and poo) on the floor, a cleaning with an robot cleaner might only worsen the cleaning state by smearing or distributing the excrements of the pet in the room to thereby soil or contaminate the carpet. However, hairs of a pet will not cause any trouble when being removed by the robot cleaner.

An object of the present invention is to provide a robot cleaner which may execute selective cleaning of foreign substances and a robot cleaning system having the same.

A further object of the present invention is to provide a robot cleaner and a method for operating the robot cleaner allowing an improved cleaning process avoiding any undesired cleaning operation and preferably providing a possibility for an interaction with the user even if the user has left the apartment or could not manually control the robot cleaner.

The objects of the present invention are solved by the features of the independent claim. Preferred embodiments are given in the dependent claims. Any "aspect", "example" and "embodiment" of the description not falling within the scope of the claims does not form part of the invention and is provided for illustrative purposes only.

The disclosure is based on the basic idea to check before cleaning whether some undesired foreign material exists on the floor. Here, generally two steps of checking are performed. A first step of checking is made by the controller of the robot cleaner. The robot cleaner includes at least one sensor or sensing device, which is sensing the floor before it is cleaned. That is during moving the robot cleaner the at least one sensor is monitoring the floor to be cleaned and is generating cleanliness information which is provided to the controller for being processed. The controller of the robot cleaner is checking whether to stop or continue the cleaning process based on the cleanliness information. If the controller detects or determines a deviation of the cleanliness information from predetermined parameters, the controller will stop the cleaning operation and may preferably provide cleaning status information via the communication unit to a remote device, which will be called also mobile terminal in the following. The cleaning status information may include at least the cleanliness information and/or other information useful for the remote device to decide whether to continue or stop the cleaning operation. The remote device might display the cleaning status information to provide the user the possibility to confirm to continue or to instruct to stop the cleaning operation. Thus, the controller is performing the first checking, if this first checking results in a deviation, the controller is able to communicate with the remote device to receive instructions of the remote device whether to continue or to stop. Thus, the second checking is made by the remote device in communication with the user to thereby achieve double checking to provide best cleaning results and to avoid a cleaning of undesired cleaning operations, e.g. cleaning (removing) of pee and poo or toys.

Thus, the object is preferably solved by an robot cleaner, comprising: a main body having a suction port; a travelling device to move the main body; cleaning device or brush assembly installed on the main body; a controller; a communication unit adapted to transmit cleaning status information to a remote device and to receive cleaning command information from a remote device; at least one sensor sensing the floor to be cleaned and providing cleanliness information to the controller; wherein the controller is adapted to determine whether to stop the cleaning operation or whether to continue the cleaning operation based on the cleanliness information. Preferably, the controller can decide whether to stop the cleaning operation or whether to continue the cleaning operation based on the cleanliness information alone. However, in a further preferred embodiment the controller may receive cleaning command information from the remote device and decide whether to stop the cleaning operation or whether to continue the cleaning operation based on the cleanliness information and the cleaning command information.

In a preferred embodiment the cleanliness information can be at least one of: picture, humidity value, metal indication value or smell indication value or a combination thereof. Thus, a plurality of different cleanliness information or a combination thereof can be used to decide whether to stop or to continue the cleaning operation. Best cleaning results can be achieved, when using at least two different kind of information. Thus, a very simple combination is to use a smell indication value (chemical sensing) and a picture. Here, if one of both information indicates a foreign material which might by critical to be cleaned and should therefore not be cleaned without confirmation, the controller might communicate with the remote device to receive cleaning command information from the user.

Preferably, the robot cleaner may further comprise at least one of: an optical sensor, a humidity sensor, metal sensor or smell sensor. Thus, by using the different sensing devices different kind of information can be sensed for being used to decide whether to stop or to continue the cleaning operation.

In a further preferred embodiment the controller may further transmit the cleaning status information to the remote device wirelessly connected to the robot cleaner and to receive cleaning command information from the remote device.

Preferably, the cleaning status information may include at least one of: the cleanliness information provided by the sensor, the position of the location causing the cleanliness information, a status of a dust container of the robot cleaner, a completion cleaning report, status of a battery of the robot cleaner or a combination thereof.

Preferably, the cleaning command information may include a yes or no or includes a location place where to operate the robot cleaner next. Thus, the amount of data to be transmitted is very small requiring only a short communication.

In a further preferred embodiment, when the controller determines to stop the cleaning operation, the controller transmits the cleaning status information and waits to receive for cleaning command information from the remote device, before continuing the cleaning operation.

The controller may continue the cleaning operation when receiving a positive cleaning command information or the controller may decide not to clean the location where the sensor has sensed the cleanliness information when receiving a negative cleaning command information.

In a further preferred embodiment, when the controller receives a negative cleaning command information, the controller may move around the location causing the cleanliness information and continue the cleaning operation at another location or to stop operation at all.

In a further preferred embodiment, the robot cleaner includes a front camera and/or bottom camera for providing cleanliness information.

In a further preferred embodiment, the robot cleaner includes a gas sensor sensitive for methane and/or ammonia. Thus, by using such gas sensor it is possible to specifically equip the robot cleaner to sense foreign material of pets, which should not be removed automatically by the robot cleaner.

Preferably, the controller may detect a foreign substance on a picture of the front camera and/or bottom camera based on a pattern matching. Thus, by storing pictures or pattern of foreign material which should cause an interaction by the user or at least stop the cleaning operation, the controller may easily compare the pictures stored in the memory with the pictures taken by the camera to decide whether the detected foreign material is critical or not.

Preferably, in case of a positive pattern matching and/or a gas value for methane and/or ammonia higher than a threshold the controller may stop the cleaning operation and transmit the cleaning status information.

Preferably, the foreign substance recognition and confirmation feature can be activated/deactivated on the robot cleaner and /or via the remote device. This facilitates to active the function if there is a certain risk for undesirably remove foreign material. On the other hand, when the risk of such foreign material is very small the user might deactivate this function to ensure a completed cleaning of the apartment.

In a further preferred embodiment, the controller may take a picture of the foreign substance and transmit the picture to the remote device, when a gas value for methane and/or ammonia higher than a threshold is detected. Thus, the amount of data to be processed is reduced.

The object is also solved by a method for operating an robot cleaner, comprising a main body having a suction port, a travelling device to move the main body, a brush assembly installed on the main body, a controller, a communication unit and at least one sensor, the method comprises the steps of: operating the robot cleaner, sensing the floor by the at least one sensor; determining by the controller whether to stop cleaning operation or whether to continue the cleaning operation based on the cleanliness information received from the sensor; if the controller determines to stop cleaning operation based on the cleanliness information, transmit a cleaning status information to a remote device; and receiving cleaning command information from the remote device and operating the robot cleaner based on the received cleaning command information.

The object is also solved by a system for operating a robot cleaner comprising: an robot cleaner as described above and a remote device wirelessly connected to the robot cleaner, the remote device comprises a display for displaying cleaning status information received from the robot cleaner, wherein the remote device transmits a cleaning command information to the robot cleaner.

The object is also solved by a robot cleaner comprising: a traveling unit configured to move a main body; a cleaning unit configured to execute cleaning; a camera configured to capture an image including foreign substances; a communication unit configured to exchange data with a mobile terminal or a server; and a controller configured to control transmission of the image including the foreign substances and image related information to the mobile terminal or the server and to execute cleaning of an area around the foreign substances based on cleaning execution information regarding the foreign substances or to execute no cleaning of the area around the foreign substances based on cleaning avoidance information regarding the foreign substances, transmitted from the mobile terminal or the server.

Preferably, the controller controls transmission of a conversation-type message to the mobile terminal or the server.

Preferably, the controller controls operation of the camera based on a foreign substance related image capture command from the mobile terminal and acquires the image including the foreign substances from the camera.

Preferably, the controller controls operation of the traveling unit based on a foreign substance related image capture command from the mobile terminal, controls operation of the camera during traveling, and acquires the image including the foreign substances from the camera.

Preferably, the controller controls transmission of cleaning completion information to the mobile terminal, after completion of cleaning of the area around the foreign substances according to the cleaning execution information.

Preferably, the controller controls transmission of response information corresponding to the cleaning avoidance information to the mobile terminal.

Preferably, the controller controls operation of the camera during a robot traveling mode or a robot cleaning mode, and controls transmission of the image including the foreign substances and the image related information to the mobile terminal or the server if the image including the foreign substances is acquired from the camera.

Preferably, the controller controls operation of the camera if a pet mode is set and controls, if an image related to excrement in the pet mode is acquired, transmission of the image related to excrement and image related information to the mobile terminal.

Preferably, the controller controls operation of the camera based on an image capture command from the mobile terminal and controls transmission of an image captured by the camera to the mobile terminal.

Preferably, the controller controls operation of the camera during a robot traveling mode or a robot cleaning mode, compares an image captured by the camera with a pre-stored image, and controls transmission of the captured image and alarm information to the mobile terminal if a difference between the two images is a designated value or more.

In another aspect, an robot cleaner is provided comprising: a traveling unit configured to move a main body; a cleaning unit configured to execute cleaning; a camera configured to capture an image including foreign substances; a communication unit configured to exchange data with a mobile terminal or a server; and a controller configured to verify an object related to the foreign substances within the image by executing signal-processing of the image including the foreign substances, acquired from the camera, to generate cleaning execution information or cleaning avoidance information regarding the foreign substances based on the verified object related to the foreign substances, and to execute cleaning of an area around the foreign substances based on the cleaning execution information or to execute no cleaning of the area around the foreign substances based on the cleaning avoidance information.

Preferably, the camera is a stereo camera and the controller includes a disparity calculator configured to execute disparity calculation of stereo images from the stereo camera; an object detector configured to detect an object from at least one of the stereo images based on disparity information of the stereo images; and an object verification unit configured to classify the detected object.

Preferably, the controller controls transmission of cleaning completion information to the mobile terminal, after completion of cleaning of the area around the foreign substances according to the cleaning execution information.

Preferably, the controller controls transmission of response information corresponding to the cleaning avoidance information to the mobile terminal.

In another aspect, an robot cleaning system is provided comprising: a robot cleaner configured to capture an image including foreign substances, to transmit the image including the foreign substances and image related information to a mobile terminal or a server, and to execute cleaning of an area around the foreign substances based on cleaning execution information regarding the foreign substances or to execute no cleaning of the area around the foreign substances based on cleaning avoidance information regarding the foreign substances, transmitted from the mobile terminal or the server; and a mobile terminal configured to display an image from the robot cleaner and to transmit the cleaning execution information and the cleaning avoidance information to the robot cleaner based on the displayed image.

Preferably, the robot cleaner transmits a conversation-type message to the mobile terminal or the server.

Preferably, the robot cleaner operates a traveling unit based on a foreign substance related image capture command from the mobile terminal, operates the camera during traveling, and acquires the image including the foreign substances from the camera.

Preferably, the robot cleaner transmits cleaning completion information to the mobile terminal, after completion of cleaning of the area around the foreign substances according to the cleaning execution information.

Preferably, the robot cleaner operates the camera during a robot traveling mode or an robot cleaning mode, and transmits the image including the foreign substances and the image related information to the mobile terminal or the server if the image including the foreign substances is acquired from the camera.

Preferably, the robot cleaner operates the camera if a pet mode is set and transmits, if an image related to excrement in the pet mode is acquired, the image related to excrement and image related information to the mobile terminal.

In the following, a short description of the drawings is given for explaining the disclosure.
Fig. 1 is a robot cleaning system acc. to one embodiment of the present disclosure;
Fig. 2a is a bottom view of a robot cleaner acc. to a first embodiment of the disclosure;
Fig. 2b is another bottom view of a robot cleaner acc. to an embodiment of the disclosure;
Fig. 2c is a perspective view illustrating the bottom of the robot cleaner according to a second embodiment of the disclosure;
Fig. 2d is a perspective view of a robot cleaner of third embodiment as shown Fig. 1;
Fig. 2e is a bottom view of the robot cleaner of Fig. 2d;
Fig. 2f is an exploded perspective view of the robot cleaner of Fig. 2f;
Fig. 3 illustrates a cleaning situation according to the disclosure;
Fig. 4 is a schematic diagram of the components of a robot cleaner according to the first, second or third embodiment;
Fig. 5 a flowchart of operation of the robot cleaner acc. to a first embodiment;
Fig. 6 is an illustration showing the remote device for controlling the robot cleaner.
Fig. 7 is an inner block diagram of a server of Fig. 1;
Fig. 8 is an inner block diagram of a mobile terminal of. 1;
Fig. 9 is a flowchart illustrating an operating method of a robot cleaner in accordance with another embodiment of the present disclosure;
Figs. 10 to 15B are reference views to describe the operating method of Fig. 9; and
Fig. 16 is one exemplary inner block diagram of a controller of Fig. 4b.

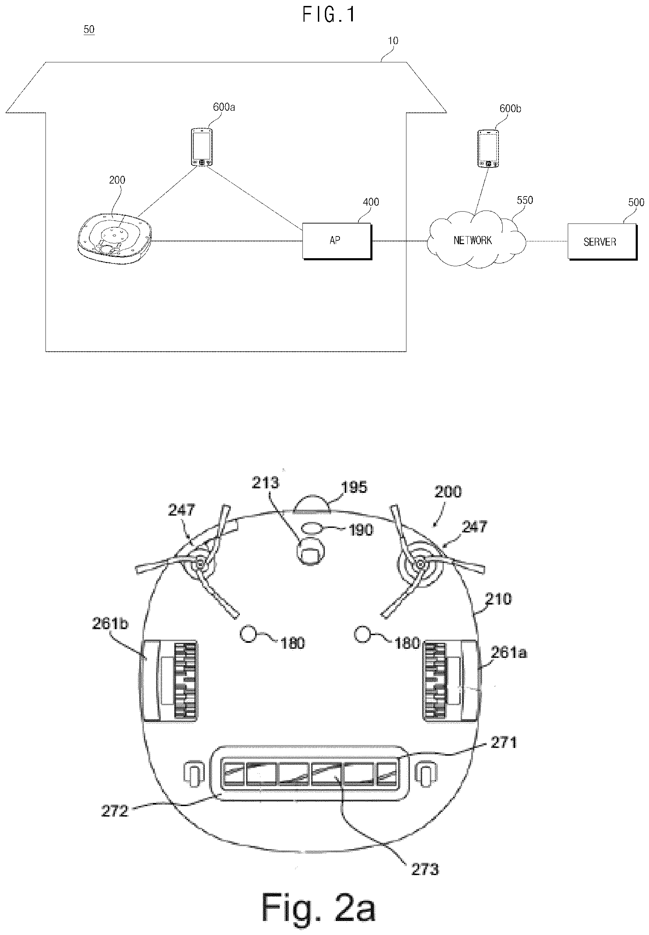

Fig. 1 is a view illustrating the configuration of a robot cleaning system in accordance with one embodiment of the present disclosure. With reference to FIG.1, a robot cleaning system 50 in accordance with one embodiment of the present disclosure may include at least a robot cleaner 200 and a mobile device 600a or 600b. Preferably, it may comprise an AP (Access Point) device 400, a server 500 and a network 550. The robot cleaner 200, the AP device 400 and the mobile terminals 600a and 600b may be disposed within a building 10, such as a home. The robot cleaner 200, which autonomously executes cleaning, may execute automatic traveling and automatic cleaning. The robot cleaner 200, in addition to the traveling function and the cleaning function, may include a communication unit (not shown) and exchange data with electronic devices within an internal network 10 or electronic devices connectable to the robot cleaner 200 through the extemal network 550. For this purpose, the communication unit (not shown) may execute data exchange with the AP device 400 by wire or wirelessly. The AP device 400 may provide the internal network 10 to an adjacent electronic device. Particularly, the AP device 400 may provide a wireless network. Further, the AP device 400 may allocate wireless channels of a designated communication method to electronic devices within the internal network 10 and execute wireless data communication through the corresponding channels. Here, the designated communication method may be Wi-Fi communication. The mobile terminal 600a located within the internal network 10 may execute monitoring and remote control of the robot cleaner 200 by being connected to the robot cleaner 200 through the AP device 400. The AP device 400 may execute data communication with an external electronic device through the external network 550 in addition to the internal network 10. As one example, the AP device 400 may execute wireless data communication with the mobile terminal 600b located at the outside through the external network 550. Here, the mobile terminal 600b located in the external network 550 may execute monitoring and remote control of the robot cleaner 200 by being connected to the robot cleaner 200 through the external network 550 and the AP device 400. As another example, the AP device 400 may execute wireless data communication with the server 500 located outside through the external network 550. The server 500 may include a voice recognition algorithm. Further, when the server 500 receives voice data, the server 500 may convert the received voice data into text data and then output the text data. The server 500 may store firmware information, driving information (course information, etc.) of the robot cleaner 200 and register product information of the robot cleaner 200. As one example, the server 500 may be a server operated by a manufacturer of the robot cleaner 200. As another example, the server 500 may be a server operated by an open application store operator. Differently from FIG.1, the server 500 may be a home server which is provided in a home to store state information of home appliances within the home or to store contents shared by the home appliances within the home. If the server 500 is a home server, the server 500 may store information related to foreign substances, for example, foreign substance images. In accordance with one embodiment of the present disclosure, the robot cleaner 200 may capture an image including foreign substances through a camera provided in the robot cleaner 200, transmit the image including the foreign substances and image related information to the mobile terminal 600 or the server 500, and clean areas around the foreign substances based on positive cleaning command information regarding the foreign substances from the mobile terminal 600 or the server 500 or not clean areas around the foreign substances based on negative cleaning command information regarding the foreign substances. Thereby, the robot cleaner 200 may selectively clean the foreign substances. Particularly, by not executing cleaning of foreign substances, such as excrement, any contamination of an area around the excrement due to the cleaning mode of the robot cleaner 200 may be prevented.

In accordance with another embodiment of the present disclosure, the robot cleaner 200 may capture an images including foreign substances through a stereo camera provided within the robot cleaner 200, verify or evaluate an object related to the foreign substances in the image by executing signal-processing or pattern recognition of the image including the foreign substances acquired from the stereo camera, generate by itself positive cleaning command information or negative cleaning command information regarding the foreign substances based on the verified object related to the foreign substances, and clean areas around the foreign substances based on the cleaning command information or not clean areas around the foreign substances. Thereby, the robot cleaner 200 may selectively clean the foreign substances.

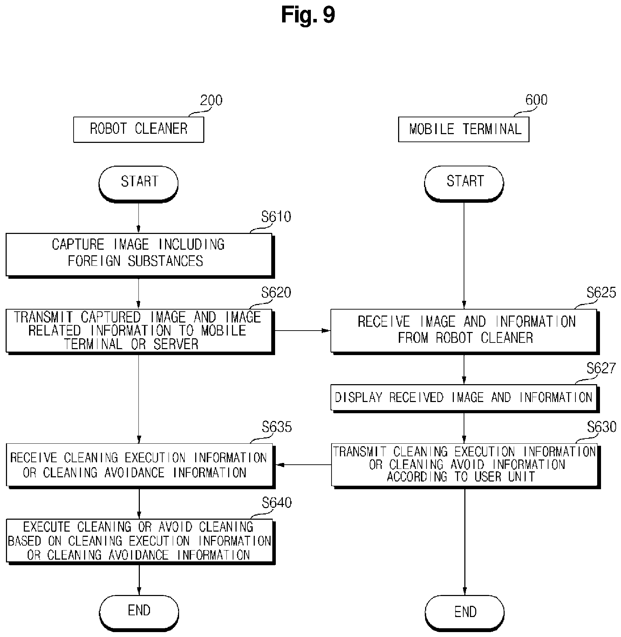

The above-described operation of the robot cleaner 200 or the operation of the robot cleaner 200 and the mobile terminal 600 will be described later in more detail with reference to FIG.9.

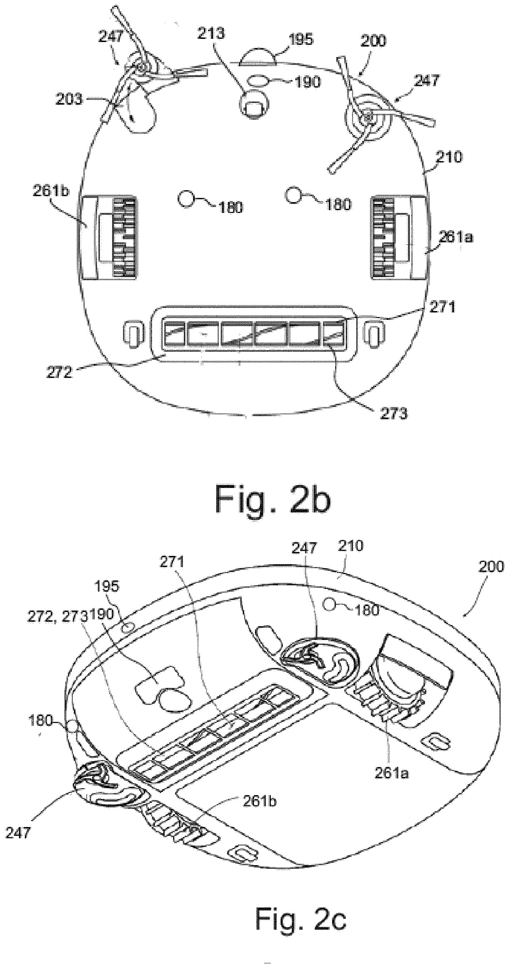

The robot cleaner 200 as shown in Figs. 2a, 2b and 2c include a main body 210 forming the outer appearance of the cleaner 200 (hereinafter called "cleaner"). The main body 210 may have a flat polyhedral shape but is not limited thereto. The main body 210 accommodates the components of the cleaner 200 for example the suction member and the battery 199 (not shown) and a collecting member (not shown) for collecting the foreign substance after being suctioned, which is disposed inside the main body 210. The suction port 111 is disposed in a bottom portion of the main body 210. The suction port 111 forms as an inlet through which a foreign substance is suctioned into the main body 210. In particular, the collecting member is accommodating the foreign substance being introduced through the suction port 271. The collecting member is exchangeable or removable to be emptied after being filled. The suction port 271 is a cut-out in the bottom portion of the main body 210. The one or more side brush assemblies 247 may have a plurality of single brushes which could rotate independently from the main brush 273. The side brush assembly 247 might be accommodated by a seating recess 203 which is disposed in the bottom portion of the main body 210. The seating recess 203 is formed by upwardly recessing a portion of the bottom of the main body 210 from the rest thereof.

As shown in Fig 2a, 2b and 2c two seating recesses 203 are disposed at both sides of the cases, wherein the number of the seating recesses is not limited thereto. Thus, it is possible to have seating recesses at the four corners of the robot cleaner for being able to move forward and backward and use simultaneously the side-brush assembly 247.

A main brush 273 is disposed at the bottom side of the main body 210 in an area corresponding to the suction port 271. The main brush 273 extends in the suction port 271 to contact the floor and to thereby contact the foreign substance on the target surface (floor) and to remove the foreign substance by passing it to the suction port 271 for being introduced into the suction port 271. The suction force may be generated by a suction fan 272. The main brush 273 is exposed downwardly through the suction port 271 and is rotatable. The main brush 273 is driven by a driving member (not shown) providing a driving force for rotating the main brush 273.

The main body 210 is further provided with at least one travelling device 280. The travelling device 280 could include a driving motor (not shown), which is disposed inside the main body 210. The travelling device 280 includes at least one driven wheel 261a which is rotated by the driving motor. Preferably there are two driven wheels 261a, 261b on both sides of the bottom side of the main body 210 and drive the robot cleaner in the desired direction. Further, there might be passive wheels 213, which are just for supporting the main body 210 of the robot cleaner to keep the main body rotatable and in a horizontal alignment. The side-brush assemblies 247 may be movably installed on the main body 210, for example side-brush assemblies 247 may be rotated to be selectively located at the lower side or the outside of the main body 210. The side-brush assemblies 247 are configured such that the suction member suctions a foreign substance located outside of the suction port 271 through the suction port 271. The side-brush assembly 247 may include a movable member and a brush having single brushes which are distanced from each other. The movable member of the side-brush assembly may perform a rotation around an axis. However, it might also perform a rectilinear movement just out of the seating recess 203 of the main body 210.

The robot cleaner 200 may include a plurality of sensors 180, which are located at different locations or positions at the bottom side or side surfaces of the main body 210. However, the location of the sensors 180 is not limited thereto. Examples for the sensors 180 could be a camera, an optical sensor, a humidity sensor, a metal sensor or a smell sensor or gas sensor or a combination thereof.

In a preferred embodiment, the robot cleaner 200 include one optical sensor, one humidity sensor, one metal sensor and one smell sensor to detect different characteristics or parameters to have an efficient sensing behavior. Thus, the cleaner is able to detect humidity as such as an indication for a critical foreign substance, which should be confirmed by the remote device. Furthermore, in case of detecting a metal, the probability is high that such substance should not be removed. In case of strange smell values, this is also a good indicator for a critical substance.

Furthermore, the robot cleaner may have a front camera 195 for taking a picture of the floor to be cleaned in front of the robot cleaner 200. Furthermore, the robot cleaner may have a bottom camera 190 for taking a picture of the floor below the bottom of the main body. However, as shown in the second embodiment only one camera 230 may be used be accommodated in a transparent housing to take picture in several directions.

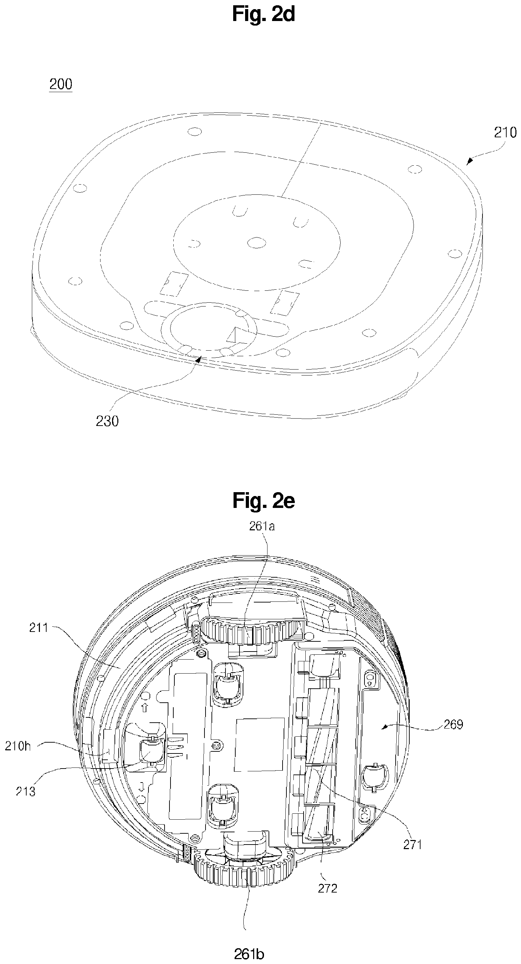

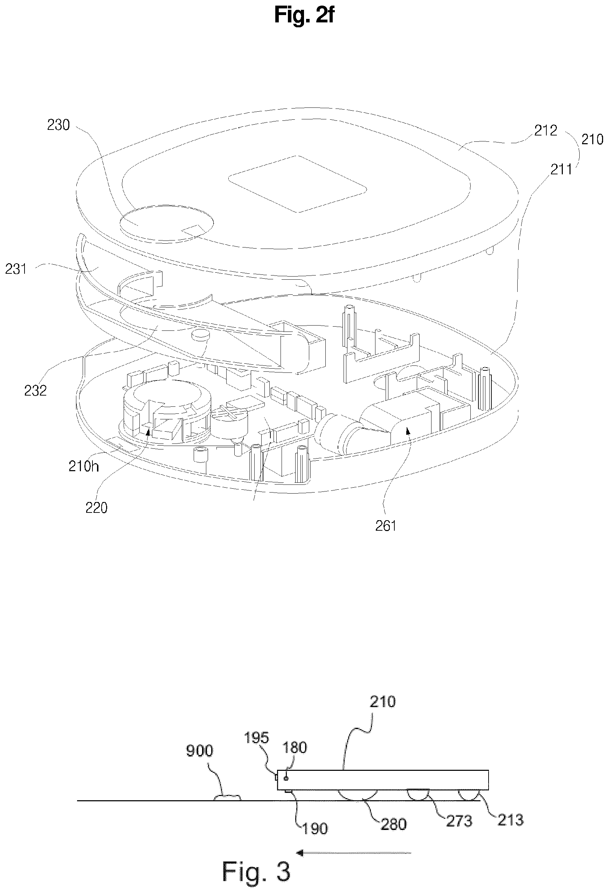

Fig.2d is a perspective view of a robot cleaner in accordance with another embodiment of the present disclosure, Fig.2e is a bottom view of the robot cleaner of Fig.2d, and Fig.2f is an exploded perspective view of the robot cleaner of Fig.2a.

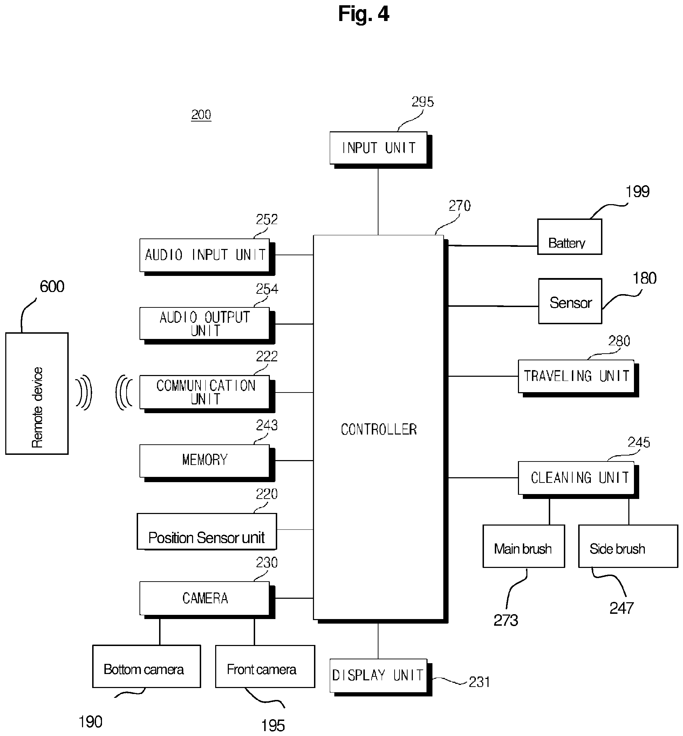

With reference to Figs. 2d to 2f, the robot cleaner 200 in accordance with one embodiment of the present disclosure may include a main body 210 provided with a lower opening 210h which is opened toward the floor. The main body 210 travels about an area to be cleaned (hereinafter, referred to as a cleaning area) as a left wheel 261a and a right wheel 261b are rotated, and sucks in dust or garbage within the cleaning area through a suction unit 269. The suction unit 269 may include a suction fan 272 provided within the main body 210 to generate suction force, and a suction hole 271 through which an air flow generated by rotating the suction fan 272 is sucked. Further, the suction unit 269 may further include a filter (not shown) to collect foreign substances from the air flow sucked in through the suction hole 271 and a foreign substance acceptor (not shown) in which the foreign substances collected by the filter are accumulated. Traveling drive units (not shown) to drive the left wheel 261a and the right wheel 261b may be provided. Particularly, the traveling drive units (not shown) may include a left wheel drive unit (not shown) to drive the left wheel 261a and a right wheel drive unit (not shown) to drive the right wheel 261b. The main body 210 may move forward or backward or be rotated by independently controlling the operations of the left wheel drive unit (not shown) and the right wheel drive unit (not shown) under the control of a controller 270 (in Fig.4). For example, if the left wheel 261a is rotated in a regular direction by the left wheel drive unit (not shown) and the right wheel 261b is rotated in the reverse direction by the right wheel drive unit (not shown), the main body 210 is rotated left or right. The controller 270 (in Fig.4) may control the left wheel drive unit (not shown) and the right wheel drive unit (not shown) such that the rotational speed of the left wheel drive unit (not shown) and the rotational speed of the right wheel drive unit (not shown) are different, thus inducing translational motion of the main body 210 executing both straight motion and rotational motion. Under the control of the controller 270 (in FIG.3), the main body 210 may avoid an obstacle or turn around the obstacle. At least one auxiliary wheel 213 to stably support the main body 210 may be further provided.

The main body 210 may include a main body lower part 211 to receive a rotation drive unit (not shown) and the traveling drive units (not shown) and a main body upper part 212 covering the main body lower part 211.

A transparent member 232 is arranged on a path of light output from a position sensor 220 or received from the outside. The transparent member 232 may be fixed to the main body 210. An opening may be formed at the front portion of the main body 210 and the transparent member 232 may be fixed to a transparent member frame 231 installed at the opening.

The position sensor 220 senses the position of an obstacle and the distance from the obstacle by emitting light toward the obstacle. The position sensor 220 may be provided in the main body 210 so as to be rotatable. The position sensor 220 may include a light transmitter (not shown) to output light and a light receiver (not shown) to receive light. The light transmitter (not shown) may include an LED or a laser diode.

In addition to the position sensor 200, a camera 230 may be disposed on the main body upper part 212 to recognize an obstacle located in front of the robot cleaner 200. Particularly, the camera 230 may be disposed on the transparent member frame 231, provided with the opening, and the transparent member 232. Thereby, images of an area above the robot cleaner 200 and an area in front of the robot cleaner 200 may be captured.

As shown in Fig.3, a situation is illustrated in which the robot cleaner 200 is moving in one direction indicated by the arrow. The robot cleaner 200 is equipped with a front camera 195 taking continuously or sequentially pictures of the floor to be cleaned next by the robot cleaner 200 in a predetermined interval. In front of the cleaner 200 there is a foreign substance 900 which is detected by the front camera 195. The operation of the robot cleaner 200 when detecting a foreign substance 900 will be explained later.

In the following, the internal components of the robot cleaner 200 according to the first embodiment shown in Figs. 2a, 2b and 2c and as shown in Figs. 2d, 2e, and 2f will be explained in further detail with reference to Fig.4.

With reference to FIG.4, the robot cleaner 200 may include a position sensor unit 220, a communication unit 222 for communication with other external devices, a camera 230, 190, 195, a display unit 231 to display the operating state of the robot cleaner 200, a memory 243, a cleaning unit 245, an audio input unit 252, an audio output unit 254, a controller 270 to control the inside of the robot cleaner 200, a traveling unit 280 to move the robot cleaner 20, an input unit 295 for user input, a sensor unit 180 and a battery 199.

The controller 270 included in the cleaner 200 is connected to all components for controlling the internal or external components of the robot cleaner and for processing the inputs and outputs of the robot cleaner. The controller 270 may also receive information from the components of the robot cleaner to process and/or control the cleaning operation of the robot cleaner. In particular, the controller 270 is connected to the main brush 273, to the side-brush assembly 247 and to the travelling device 280 for moving the robot cleaner in a desired direction to clean the room of the apartment. Furthermore, it is controlling depending on the cleaning program the main brush 273 and the side-brush assembly 247. Moreover, the controller 270 is connected to the at least one optical sensor 180, to the front camera 195 and/or the bottom camera 190. The controller 270 is also connected to a communication unit 222 which is able to transmit and receive data to and from a remote device 600 wirelessly coupled to the communication unit 222. Furthermore, the controller 270 is connected to the battery 199 for controlling the battery 199 to have sufficient power for moving the cleaner in the room. In case the battery 199 only provides power corresponding to a certain power threshold, the controller 270 will move the robot cleaner 200 back to a charging station for charging the battery 199.

Furthermore, the controller 270 is connected to a memory 243, in which certain parameters are stored. Thus, the memory 243 may include predetermined thresholds for the cleanliness information. For instance the memory 243 may include a value for a humidity at which the controller 270 should decide for a foreign substance and should interrupt the operation to get a confirmation of the user. Further, the memory 243 may include a value for the detecting of metal. Thus, if a metal sensor 243 is used for detecting substances or components including metal, a certain threshold can be stored at which the controller should stop the operation. Furthermore, certain parameters for detecting a smell could be stored in the memory 243.

In a further embodiment it is possible to store certain patterns or pictures in the memory 243. Thus, the controller 270 is able to compare a picture taken by the camera 230 or the bottom or front camera 190, 195 and compare this picture with the pictures stored in the memory 243 to decide whether to stop or whether to continue the cleaning operation.

According to the first embodiment, the sensor 180 provides cleanliness information to the controller, wherein the cleanliness information may include just a value sensed by the sensor. However the cleanliness information may be also a picture or image taken by a camera. Based on this information, the controller 270 will take the decision whether to stop or continue the cleaning operation. In case the controller 270 decides to stop the cleaning operation, it will further generate cleaning status information which may include the cleanliness information. Furthermore, the cleaning status information might further include the position of the location which is causing the cleanliness information. It might further include the status of the dust container and/or a completion cleaning report or the status of the battery. The cleaning status information might only include one or some of the above mentioned elements.

The position sensor unit 220 may include a position sensor to sense the position of the robot cleaner 200. That is, as described above with reference to FIGs. 2a to 2f, the position sensor unit 220 may include the position sensor. The position sensor may include a light transmitter (not shown) to output light and a light receiver (not shown) to receive light corresponding to output light. The position sensor may include a GPS module. The position sensor may sense the position of the robot cleaner 200 by receiving a GPS signal.

The communication unit 222 may include at least a wireless communication unit (not shown) executing wireless communication. The communication unit 222 may include a wireless communication unit (not shown) so as to communicate with the AP device 400 wirelessly or the base station of a radio network. Here, the wireless communication unit (not shown) may execute Wi-Fi communication. The communication unit 222 may execute wireless data communication with the mobile terminal 600 through the AP device 400. For example, the communication unit 222 may receive a remote control signal from the remote device 300 or mobile terminal 600 and transmit the received remote control signal to the controller 270.

The communication unit 222 may receive power information from a power information transmission device (not shown). For this purpose, the communication unit 222 may include a communication module (not shown) in addition to the wireless communication unit (not shown).

The communication unit 222 may be provided within the robot cleaner 200, or be attached to a case of the robot cleaner 200 and then connected to an inner circuit of the robot cleaner 200 by wire.

In addition to the position sensor 200, the camera 230, 195 may be disposed on the main body upper part 212 to recognize an obstacle located in front of the robot cleaner 200. The camera 230 may include a CCD module or a CMOS module. The camera 230 may be an IR camera to detect a distance from an external object. The camera 230 may include a stereo camera. For example, the camera 230 may include a plurality of RGB cameras separated from each other by designated intervals.

The display unit 231 may display the operating state of the robot cleaner 200 under the control of the controller 270. For this purpose, the display unit 231 may include LEDs. Otherwise, the display unit 231 may include LCDs to display various pieces of information.

The memory 243 may store various pieces of data for the overall operation of the robot cleaner 200. Further, the memory 243 may include a voice recognition algorithm.

The cleaning unit 245 may suck in foreign substances located under the robot cleaner 200. For this purpose, the robot cleaner 200 may travel by use of the traveling unit 280 and suck in foreign substances by operating the cleaning unit 245 during traveling or temporarily stoppage.

For this purpose, the cleaning unit 245 may include the suction unit 269, as described above with reference to FIGs. 2a to 2f. Here, the suction unit 269 may include a suction fan 272 provided within the main body 210 to generate suction force, and a suction hole 271 through which an air flow generated by rotating the suction fan 272 is sucked in. Further, the suction unit 269 may further include a filter (not shown) to collect foreign substances from the air flow sucked in through the suction hole 271 and a foreign substance acceptor (not shown) in which the foreign substances collected by the filter are accumulated.

The audio input unit 252 may receive user's voice input. For this purpose, the audio input unit 252 may include a microphone. The audio input unit 252 may convert received voice into an electrical signal and transmit the electrical signal to the controller 270.

The audio output unit 254 may convert an electrical signal received from the controller 270 into an audio signal and then output the audio signal. For this purpose, the audio output unit 254 may include a speaker.

The controller 270 may control the overall operation of the robot cleaner 200. The controller 270 may control the operations of the position sensor unit 220, the communication unit 222, the camera 230, the display unit 231, the memory 243, the cleaning unit 245, the audio input unit 252, the audio output unit 254, the traveling unit 280, the input unit 295 and the like.

The traveling unit 280 may move the robot cleaner 200. For this purpose, the traveling unit 280, as described above with reference to FIGs. 2a to 2f, may include the left wheel 261a, the right wheel 261b and the traveling drive units (not shown) to drive the left wheel 261a and the right wheel 261b. Particularly, the traveling drive units (not shown) may include a left wheel drive unit (not shown) to drive the left wheel 261a and a right wheel drive unit (not shown) to drive the right wheel 261b.The traveling unit 280 may control one of regular rotation and reverse rotation of each of the left wheel 261a and the right wheel 261b under the control of the controller 270, thereby allowing the main body 210 to move forward or backward or to be rotated. For example, if the left wheel 261a is rotated in a regular direction and the right wheel 261b is rotated in the reverse direction, the main body 210 is rotated left or right. Further, the controller 270 may control the left wheel 261a and the right wheel 261b such that the rotational speed of the left wheel 261a and the rotational speed of the right wheel 261b are different, thus inducing translational motion of the main body 210 executing both straight motion and rotational motion.

The input unit 295 may include one or more local keys for user input.

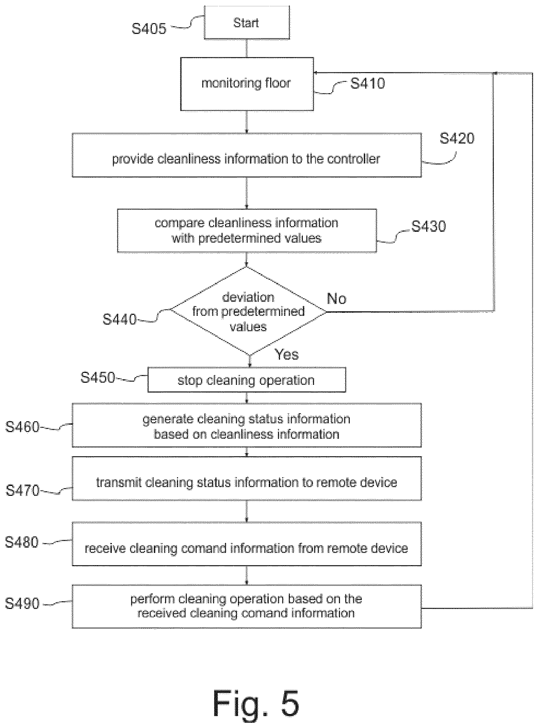

The operation of the controller 270 will be explained in further detail with reference to Fig.5 illustrating the method according to a first embodiment. After starting the cleaning operation of the robot cleaner in step S405, the robot cleaner 200 will clean and monitor the floor in step S410, preferably by use of the at least one or multiple sensors 180 and/or cameras 190, 195. The cleanliness information sensed by the one or more sensors 180 and/or the cameras 190, 195 is provided to the controller 270 in step S420. In a next step, the controller 270 will compare the received cleanliness information with predetermined parameters, which might be stored in the memory 243, in step S430. In case of detecting a deviation between the cleanliness information and a predetermined parameter, in step S440, the controller 270 will stop the cleaning operation, in step S450. After stopping the cleaning operation in step S450, the controller 270 will generate cleaning status information for being transmitted to the remote device or mobile terminal 600, in step S460 and S470. The cleaning status information is generally based on the cleanliness information received from the one or more sensors 180 and other parameters sensed by or stored in the robot cleaner 200. The cleaning status information is transmitted in step S470 to the remote device or mobile terminal 600.

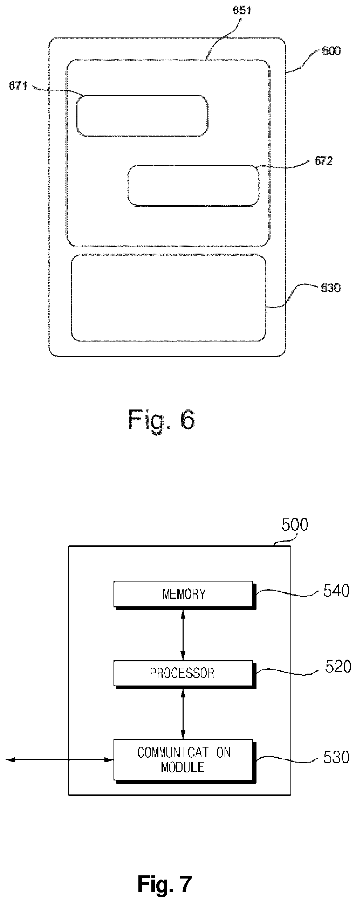

The remote device might be a mobile terminal 600 of a user, as exemplary shown in fiG.6. However, it might be also any other computing device or display device being able to receive messages and to display the messages on a display 651 thereon. The user will be notified by a sound or just a display of a message 620 that the robot cleaner 200 has detected a foreign substance and has interrupted the cleaning operation since certain thresholds or predetermined parameters are exceeded or underrun. Based on the cleaning status information illustrated as a message 620, which is provided to the user, the user may decide whether to stop the cleaning operation and to decide after being at home, whether to continue the cleaning operation or not, or whether the robot cleaner should clean the detected foreign substance 900 or whether the robot cleaner should move around the location where the foreign substance has been found and should not clean a predetermined area around the foreign substance detected by the robot cleaner.

The user is then inputting a certain cleaning command 640 which is transmitted as cleaning command information from the remove device 600 to the robot cleaner in step S480. The robot cleaner 200 is then carrying on the cleaning operation based on the received cleaning command information in step S490.

In Fig.6 a typical remote device 600 is shown. The remote device 600 has a display 610 for displaying messages 620. The remote device 600 is able to receive commands from the user via an input device 630 which might be a touchscreen. So, the user might input a cleaning command 640 and transmit the cleaning command to the robot cleaner which is received at the communication unit 222 of the cleaner 200. The remote device 600 may display the cleaning status information 620 received from the robot cleaner 200 and thus the user is able to decide based on the transmitted values or pictures whether the cleaner 200 should carry on or should stop the cleaning process or should go around the detected foreign substance 900. Thus, in case of a pet, which has lost a foreign substance, the user is able to instruct the robot cleaner 200 not to clean this location and to prevent a big mess.

In case the user can easily decide whether to stop or whether to continue the cleaning process, he might input a simple YES or NO, which is transmitted to the robot cleaner 200 and is received by the communication unit 222 and processed by the controller 270, respectively. In case the user recognizes the foreign substance detected by the one or more sensors 180 and/or the cameras 190, 195, he might define an area around the location which should be excluded from being cleaned by the robot cleaner 200 without the presence of the user.

A further possibility, which might be possible in such situation is that the user instructs the robot cleaner 200 to go back to the charging station to thereby stop the cleaning operation and to ensure a fully charged battery.

Alternatively, the user might instruct the robot cleaner 200 to clean another room, which should be also cleaned.

The robot cleaner 200 as described above might be equipped with one or more different sensors 180 or cameras 190, 195. In case of only having picture information of a foreign substance, the controller 270 might perform a pattern recognition by using pictures stored in the memory 243 and comparing these pictures with the picture taken by one of the cameras 190, 195 or the optical sensor 180. Thereby it might be possible to detect a Lego^{™} -brick or any other toy pieces which should not be suctioned into the suction port 271 and where a cleaning operation should be avoided.

Here, it is possible that the controller 270 is able to decide by its own not to clean this place. One possibility in such situations is to go around the detected toy element or other element automatically. Another possibility is to use the side brush assemblies 247 and turn them in an opposite direction so that the detected component or element is pushed away from the area which is cleaned by the robot cleaner, preferably into an area which was already cleaned and where the user can find the detected toy element later easily.

The decision by the controller 270 whether to transmit the cleaning status information to the user or not, might be taken if only one of the monitored parameters are exceeded or underrun, respectively, or if for instance a first or second threshold of a gas value or smell value has been detected or in case of a positive pattern matching of the picture taken from the detected foreign substance to allow the controller 270 to decide to transmit the cleaning status information to the user and to wait for receiving a cleaning command information from the user.

A further possibility is that, after detecting that one predetermined parameter has being exceeded or underrun, to take pictures and to try to further find out by the controller 270 which kind of foreign substance has been detected, before prompting the user by transmitting a cleaning status information to the user to thereby reduce the interruptions of the user, respectively. Thus, only in critical situations, when a not defined foreign substance 900 has been detected, the user will be informed to confirm whether to stop or to continue the cleaning operation. Thus, in very simple situations, e.g. when detecting a Lego-brick, the controller 270 might decide by themselves not to clean that location without transmitting the cleaning status information to the remote device 600 for asking the user to confirm whether to stop or to continue the cleaning process.

In a further preferred embodiment, the controller 270 is able to process the cleaning command information received from the user after having transmitted cleaning status information to the user to thereby provide an adaptive learning process. So after having once received a cleaning command for continuing the cleaning operation in case of a detected toy or other component, the controller 270 may store the picture or transmitted status information in the memory 243 which has been taken or generated before as a positive picture or status information, so in the next case of detecting such toy or element the controller 270 may avoid to transmit the cleaning status information and to wait for a cleaning command of the user and to take the decision by itself not to clean the location, where the detected foreign substance has been found.

In a further preferred embodiment, it is possible, that if the controller 270 notices that no connection to the remote device 600 could be established with its communication unit 222 to transmit the cleaning status information to the remote device of the user, the robot cleaner 200 might go back to the charging station, where a wired connection to the communication network is possible via the power supply or Ethernet connection to thereby transmit the information to remote device 600 of the user or the robot cleaner 200 might go back to a place, where a proved communication status was noticed last. Thus, it is possible that the robot cleaner 200 can reliably transmit the status cleaning information to the user in case of losing the communication network.

Additionally or alternatively, in such situation of not being able to transmit the cleaning status information to the user, the robot cleaner might independently decide just to clean another room or another location to thereby avoid cleaning the location at which the foreign substance has been detected.

By having such possibility of informing the user and provide the possibility to interact with the robot cleaner 200, the user has an increased convenience because he can instruct the cleaner during his absence to further clean the room to complete the cleaning process or to stop cleaning a certain location at which a foreign substance has been detected, to thereby avoid a big mess.

Thus, finally the cleaning performance is drastically improved and the user is also able to avoid on the other hand a big contamination or a pollution of its carpet or floor and also a contamination of the robot cleaner.

Fig.7 is an inner block diagram of the server of Fig.1. With reference to Fig.7, the server 500 may include a communication module 530, a memory 540 and a processor 520. The communication module 530 may receive information regarding the robot cleaner 200 from the remote device or mobile terminal 600. Particularly, the communication module 530 may receive product information of the robot cleaner 200. Further, the communication module 530 may transmit registration result information of the received product information of the robot cleaner 200 to the mobile terminal 600. The communication module 530 may exchange data with the robot cleaner 200. As one example, the communication module 530 may receive information regarding the robot cleaner 200 from the robot cleaner 200. As another example, the communication module 530 may transmit cleaning pattern information, cleaning course information and the like to the robot cleaner 200.

For this purpose, the communication module 530 may include an Internet module or a mobile communication module. The memory 540 may store the received product information of the robot cleaner 200 to register the product of the robot cleaner 200. The memory 540 may store the latest cleaning pattern information and the latest cleaning course information of the robot cleaner 200 and the like. The processor 520 may control the overall operation of the server 500. If the product information of the robot cleaner 200 is received from the mobile terminal 600, the processor 520 may control generation of product registration result information of the robot cleaner 200. Further, the processor 520 may control transmission of the generated product registration result information to the mobile terminal 600. Further, the processor 520 may control transmission of the latest cleaning pattern information and the latest cleaning course information of the robot cleaner 200 and the like to the robot cleaner 200. The server 500 may be a server operated by a manufacturer of the robot cleaner 200 or a server operated by an application store operator regarding the robot cleaner 200.

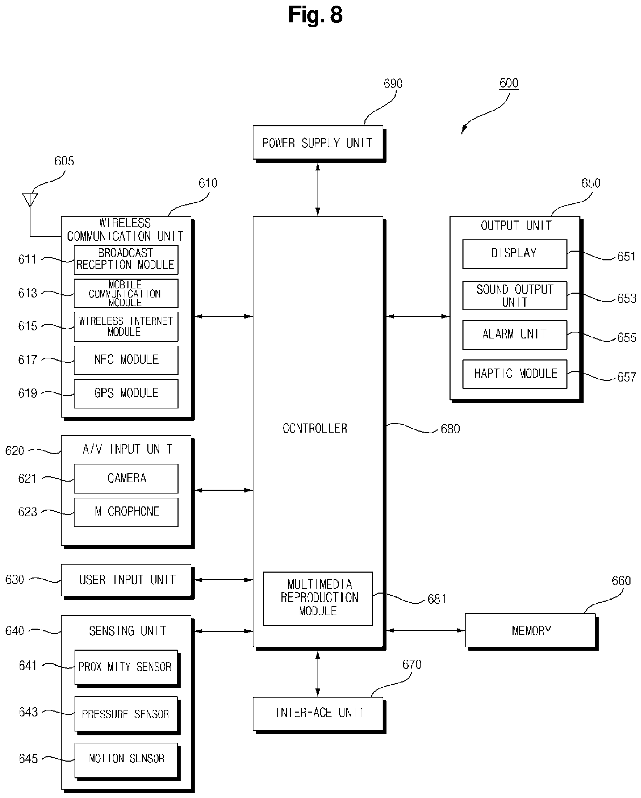

Fig.8 is an inner block diagram of the mobile terminal or remote device 600 shown in Fig.1 and 6. With reference to Fig.8, the mobile terminal 600 may include a wireless communication unit 610, an audio/video (A/V) input unit 620, a user input unit 630, a sensing unit 640, an output unit 650, a memory 660, an interface unit 670, a controller 680, and a power supply unit 690. The wireless communication unit 610 in accordance with the embodiment of the present disclosure may exchange data with a power management unit 500 through a network router 550. As one example, if the mobile terminal 600 is in a power monitoring mode of an internal power network, the wireless communication unit 610 may transmit a power monitoring request and receive monitoring information thereby. As another example, if the mobile terminal 600 is a remote control mode of the internal power network, the wireless communication unit 610 may transmit a remote control signal. Then, the wireless communication unit 610 may receive result information of remote control. The wireless communication unit 610 may include a broadcast receiver module 611, a mobile communication module 613, a wireless Internet module 615, an NFC module 617 and a Global Positioning System (GPS) module 619. The broadcast receiver module 611 may receive at least one of a broadcast signal and broadcast related information from an external broadcast management server through a broadcast channel. Here, the broadcast channel may include a satellite channel or a terrestrial channel. The broadcast signal and/or the broadcast related information received through the broadcast receiver module 611 may be stored in the memory 660. The mobile communication module 613 may transmit/receive a wireless signal to/from at least one of a base station, an external terminal and a server on a mobile communication network. Here, the wireless signal may include a voice call signal, a video call signal or various types of data according to transmission/reception of a text/multimedia message. The wireless Internet module 615 refers to a module for connection to wireless Internet. The wireless Internet module 615 may be provided at the inside or outside of the mobile terminal 600. For example, the wireless Internet module 615 may execute Wi-Fi-based wireless communication or Wi-Fi Direct-based wireless communication. The NFC module 617 may execute near field communication. If the NFC module 617 approaches an NFC tag or an electronic device having an NFC module mounted therein within a designated distance, i.e., executes tagging, the NFC module 617 may receive data from the corresponding electronic device or transmit data to the corresponding electronic device. In addition, as near field communication techniques, Bluetooth, Radio Frequency Identification (RFID), Infrared Data Association (IrDA), Ultra Wideband (UWB), ZigBee communication and the like may be used. The GPS module 619 may receive position information from a plurality of GPS satellites. The A/V input unit 620 may receive audio signal or video signal input and include a camera 621 and a microphone 623. The user input unit 630 generates key input data which a user inputs to control the operation of the terminal 600. For this purpose, the user input unit 630 may include a keypad, a dome switch, a touch pad (constant pressure/electrostatic) and the like. Particularly, if the touch pad and a display 651 form a layered structure, they may be referred to as a touchscreen. The sensing unit 640 may sense the current state of the mobile terminal 600, such as the opening/closing state of the mobile terminal 600, the position of the mobile terminal 600, and whether or not a user contacts the mobile terminal 600, and generate a sensing signal to control the operation of the mobile terminal 600. The sensing unit 640 may include a proximity sensor 641, a pressure sensor 643, a motion sensor 645 and the like. The motion sensor 645 may sense the motion or position of the mobile terminal 600 using an acceleration sensor, a gyro sensor, a gravity sensor and the like. Particularly, the gyro sensor is a sensor to measure an angular velocity and may thus sense a direction (an angle) rotated from a reference direction. The output unit 650 may include the display 651, a sound output module 653, an alarm unit 655, a haptic module 657 and the like. The display 651 outputs and displays information processed by the mobile terminal 600. If the display 651 and the touch pad form a layered structure to produce a touchscreen, as described above, the display 651 may be used as an input device, through which information may be input by user touch, as well as an output device. The sound output module 653 outputs audio data received from the wireless communication unit 610 or stored in the memory 660. The sound output module 653 may include a speaker, a buzzer and the like. The alarm unit 655 outputs a signal informing the mobile terminal 600 of occurrence of an event. For example, the alarm unit 655 may output a signal through vibration. The haptic module 657 may generate various haptic effects which a user may feel. As a representative example of haptic effects generated by the haptic module 657, vibration may be used. The memory 660 may store a program to process and control the controller 680 and execute a function of temporarily storing input or output data (for example, a phone book, a message, a still image, a moving picture and the like). The interface unit 670 may serve as an interface with all external devices connected to the mobile terminal 600. The interface unit 670 may receive data or power from these external devices and transmit the received data or power to the respective elements within the mobile terminal 600, and transmit data within the mobile terminal 600 to the external devices. The controller 680 generally controls the operations of the respective elements, thus controlling the overall operation of the mobile terminal 600. For example, the controller 680 may execute control and processing related to voice call, data communication, video call and the like. Further, the controller 680 may include a multimedia reproduction module 681 to reproduce multimedia. The multimedia reproduction module 681 may be implemented as hardware within the controller 680 or implemented as software separately from the controller 680. The power supply unit 690 may receive external power or internal power under the control of the controller 680 and then supply power required to operate the respective elements. Fig.8 is an exemplary block diagram of the mobile terminal 600 in accordance with one embodiment of the present disclosure. The respective elements of the block diagram may be combined or omitted or new elements may be added according to specifications of the mobile terminal 600. That is, as needed, two or more elements may be combined into one unit or one element may be subdivided into two or more elements. Further, functions executed by the respective blocks are only to describe the embodiment of the present disclosure and the detailed operations or devices thereof do not limit the scope of the present disclosure.

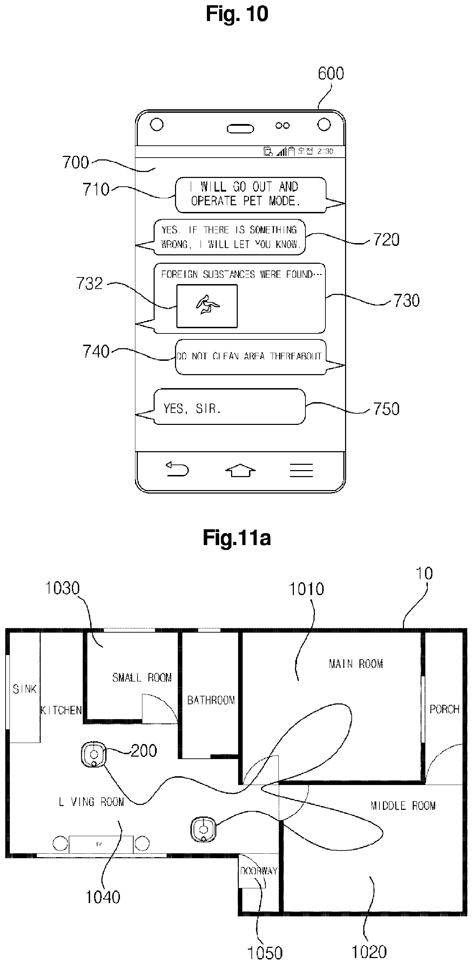

Fig.9 is a flowchart illustrating an operating method of a robot cleaner in accordance with one embodiment of the present disclosure and Figs. 10 to 15b are reference views to describe the operating method of Fig.9. First, with reference to Fig.9, the camera 230 of the robot cleaner 200 may capture an image including foreign substances (Operation S610). Thereafter, the controller 270 of the robot cleaner 200 may control transmission of the cleanliness information being represented as captured image and image related information to the mobile terminal 600 or the server 500 (Operation S620). Thereafter, the mobile terminal 600 may receive the cleanliness information including the captured image and the image related information from the robot cleaner 200 (Operation S625). Thereafter, the controller 680 of the mobile terminal 600 may control display of the received image and the image related information on the display 651 (Operation S627). The controller 680 of the mobile terminal 600 may transmit cleaning command information being cleaning execution information (Yes) or cleaning avoidance information (No) to the robot cleaner 200 according to user input (Operation S630). Thereafter, the controller 270 of the robot cleaner 200 may receive the cleaning execution information (Yes) or the cleaning avoidance information (No) from the mobile terminal 600 through the communication unit 222 (Operation S635). Thereafter, the controller 270 of the robot cleaner 200 may control the robot cleaner 200 so as to clean an area around foreign substances based on the cleaning execution information or not to clean the area around the foreign substances based on the cleaning avoidance information (Operation S640). That is, the controller 270 of the robot cleaner 200 may control the robot cleaner 200 so as to selectively clean the area around the foreign substances. As one example, if the foreign substances are excrement of a pet, a user located at a remote position may verify an excrement image displayed on his/her own mobile terminal 600 and transmit cleaning avoidance information (No) to the robot cleaner 200. Thereby, although the robot cleaner 200 is in the cleaning mode, the robot cleaner 200 may not clean an area around the excrement, thus preventing the area around the excrement from being more contaminated by cleaning. As another example, if the foreign substances are hairs, a user located at a remote position may verify a hair image displayed on his/her own mobile terminal 600 and transmit cleaning execution information (Yes) to the robot cleaner 200. Thereby, although the robot cleaner 200 is not in the cleaning mode, the robot cleaner 200 may clean the hairs, thus keeping the floor within a building clean. The capture of the image in the operation S610 may be executed based on a foreign substance related image capture command from the mobile terminal 600. For example, if a foreign substance related image capture command is received from the mobile terminal 600 through the communication unit 222, the controller 270 of the robot cleaner 200 may control the traveling unit 280 so that the robot cleaner 200 travels in the home. Further, the controller 270 may activate the camera 230 and control the camera 230 so as to capture an image in the home during traveling. The capture of the image in the operation S610 may be executed automatically during the traveling mode or the cleaning mode of the robot cleaner 200. That is, although no foreign substance related image capture command is received from the mobile terminal 600, the controller 270 of the robot cleaner 200 may automatically activate the camera 230 during the traveling mode or the cleaning mode and thus control the camera 230 so as to capture an image in the home during traveling or cleaning. The controller 270 of the robot cleaner 200 may control transmission of the captured image to at least one of the mobile terminal 600 and the server 500 regardless of whether or not the image capture command is received. Further, the controller 270 of the robot cleaner 200 may compare the captured image with an image pre-stored in the memory 243 transmission of and control transmission of the captured image to at least one of the mobile terminal 600 and the server 500, if a difference between the captured image and the stored image is a designated value or more. For example, only if foreign substances are present on the floor in the home, the controller 270 of the robot cleaner 200 may control transmission of a captured image including the foreign substances to at least one of the mobile terminal 600 and the sever 500. The controller 270 of the robot cleaner 200 may control transmission of related information together with transmission of the captured image. For example, the controller 270 of the robot cleaner 200 may control transmission of a conversation-type message "Foreign substances are found" to at least one of the mobile terminal 600 and the server 500 when the captured image is transmitted. In relation to Operation S627, the controller 680 of the mobile terminal 600 may control display of the received image and the related information in a conversation window. Further, the controller 680 of the mobile terminal 600 may control display of the image related information as a conversation-type message. For example, the controller 680 of the mobile terminal 600 may control display of conversation contents through a conversation window with the robot cleaner 200. Thereby, a user may have a conversation with the robot cleaner 200 and feel an emotional connection to the robot cleaner 200. In relation to Operation S630, the controller 680 of the mobile terminal 600 may recognize cleaning execution information or cleaning avoidance information based on characters input to the conversation window by a user and control transmission of the cleaning execution information or the cleaning avoidance information to the robot cleaner 200. As one example, if user conversation content "Do not clean area" is input, the controller 680 of the mobile terminal 600 may judge this content as cleaning avoidance information and control transmission of the cleaning avoidance information to the robot cleaner 200. The controller 270 of the robot cleaner 200 may execute cleaning of an area around the foreign substances according to the cleaning execution information and transmit cleaning completion information to the mobile terminal 600 after cleaning of the area around the foreign substances has been completed. As another example, if user conversation content "They may be cleaned" is input, the controller 680 of the mobile terminal 600 may judge this content as cleaning execution information and control transmission of the cleaning execution information to the robot cleaner 200. The controller 270 of the robot cleaner 200 may control transmission of response information corresponding to the cleaning avoidance information to the mobile terminal 600. If a pet mode is set, the controller 270 of the robot cleaner 200 may control the camera 230 so as to capture an image in the home while traveling about the home. Further, if an image related to excrement in the pet mode is captured, the controller 270 of the robot cleaner 200 may control automatic transmission of the image related to excrement and image related information to the mobile terminal 600.

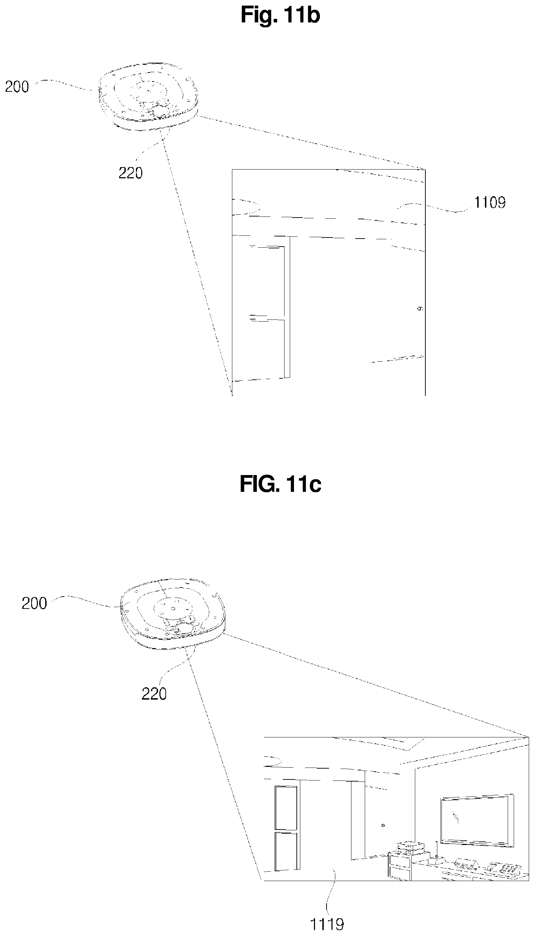

Fig.10 exemplarily illustrates display of conversation contents related to cleaning avoidance information between the robot cleaner 200 and the mobile terminal 600, on the mobile terminal 600. With reference to Fig.10, a conversation window 700 for exchange of data with the robot cleaner 200 may be displayed on the mobile terminal 600. First, if text 710 related to a pet mode command is input by a user, the controller 680 of the mobile terminal 600 may analyze the text 710 and transmit the pet mode command to the robot cleaner 200. The controller 270 of the robot cleaner 200 may receive the pet mode command and transmit a response message in response to the pet mode command to the mobile terminal 600, through the communication unit 222. The controller 680 of the mobile terminal 600 may control display of text 720 corresponding to the response message in the conversation window. The controller 270 of the robot cleaner 200 may control execution of the pet mode. That is, the controller 270 of the robot cleaner 200 may control the traveling unit 280 so that the robot cleaner 200 travels about the home. Then, during traveling, the controller 270 of the robot cleaner 200 may control the camera 230 and the sensors 180 so as to capture images or sense cleanliness information. Fig.11a exemplarily illustrates traveling of the robot cleaner 200 about the home 10. During such traveling, the camera 230 or sensor 180 may be activated and execute image capture or sensing. Fig.11b exemplarily illustrates a main room captured image 1109 and Fig.11c exemplarily illustrates a living room captured image 1119. The controller 270 of the robot cleaner 200 may compare a captured image with an image pre-stored in the memory 243 and determine whether or not foreign substances are present according to a difference between the two images. As one example, the controller 270 of the robot cleaner 200 may compare the main room captured image 1109 of Fig.11b with an image pre-stored in the memory 243 and judge whether or not foreign substances are present. In more detail, if a difference between the main room captured image 1109 of Fig.11b and the image pre-stored in the memory 243 is a designated value or less, the controller 270 of the robot cleaner 200 may judge that no foreign substances are present. As another example, the controller 270 of the robot cleaner 200 may compare the living room captured image 1119 of Fig.11c with an image pre-stored in the memory 243 and judge whether or not foreign substances are present. In more detail, if a difference between the living room captured image 1119 of Fig.11c and the image pre-stored in the memory 243 is a designated value or less, the controller 270 of the robot cleaner 200 may judge that no foreign substances are present.

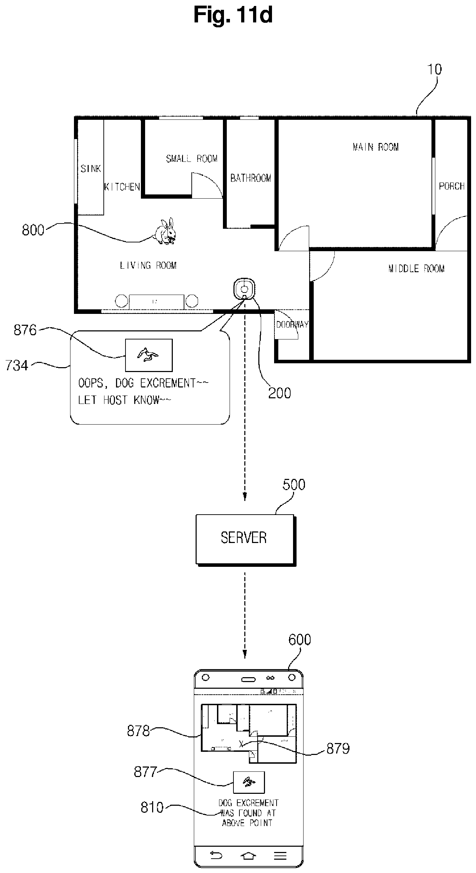

Fig.11d exemplarily illustrates a case in that a pet 800 is existing within the living room of the home and excrement is present around the pet 800. The controller 270 of the robot cleaner 200 compares a captured image 876 including excrement with a pre-stored image and judges that foreign substances are present if a difference between the two images is a designated value or more. Upon judging that foreign substances are present, the controller 270 of the robot cleaner 200 may control transmission of the captured image 876 including excrement and related information to a predetermined user's mobile terminal 600. Although Fig.11d exemplarily illustrates that the captured image 876 and the related information are transmitted to the mobile terminal 600, preferably through the server 500, the captured image 876 and the related information may be transmitted directly to the mobile terminal 600 not via the server 500. The controller 680 of the mobile terminal 600 may control display of a brief home map image 879, a captured image 877 and related information 810. The brief home map image 879 may be received from the robot cleaner 200 but the present disclosure is not limited thereto. That is, the brief home map image 879 may be stored in the memory 660 of the mobile terminal 600. A user may simply sense that excrement of a pet is generated in the home through the displayed brief home map image 879, captured image 877 and related information 810. If an image 732 including foreign substances in the home and related information 730 are received from the robot cleaner 200 during display of the conversation window 700 of Fig.10, the controller 680 of the mobile terminal 600 may control display of the image 732 including foreign substances and the related information 730, as exemplarily shown in Fig.10. If a user inputs user conversation content "Do not clean area" 740, the controller 680 of the mobile terminal 600 may judge this content as cleaning avoidance information and control transmission of the cleaning avoidance information to the robot cleaner 200. The controller 270 of the robot cleaner 200 may transmit response information 750 in response to reception of the cleaning avoidance information to the mobile terminal 600. The controller 680 of the mobile terminal 600 may control display of the response information 750 corresponding to the cleaning avoidance information in the conversation window 700. Through the conversation contents in the conversation window 700, the user may cause the robot cleaner 200 not to execute cleaning, if it is difficult to clean foreign substances, such as, excrement of a pet, using the robot cleaner 200. Therefore, user convenience may be increased.

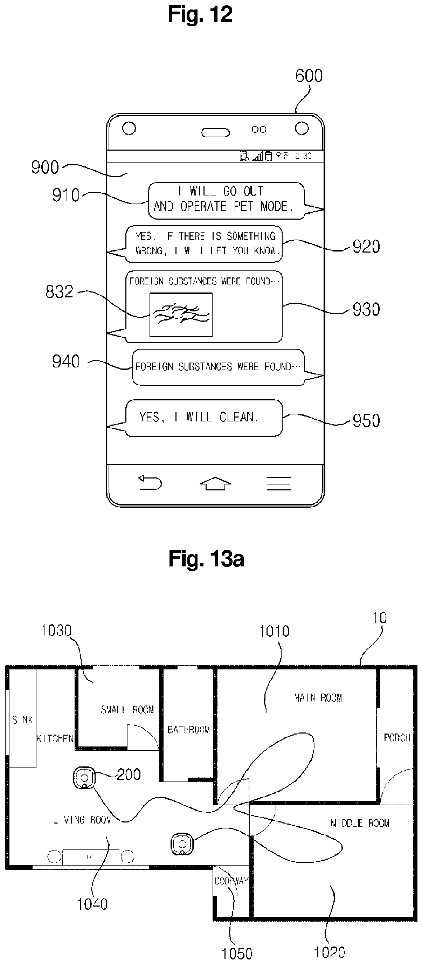

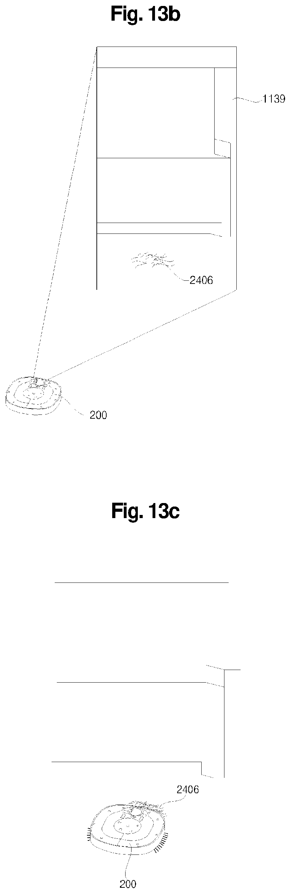

Fig.12 exemplarily illustrates display of conversation contents related to cleaning execution information between the robot cleaner 200 and the mobile terminal 600, on the mobile terminal 600. With reference to Fig.12, a conversation window 900 for exchange of data with the robot cleaner 200 may be displayed on the mobile terminal 600. First, if text 910 related to a pet mode command is input by a user, the controller 680 of the mobile terminal 600 may analyze the text 910 and transmit the pet mode command to the robot cleaner 200. The controller 270 of the robot cleaner 200 may receive the pet mode command and transmit a response message in response to the pet mode command to the mobile terminal 600, through the communication unit 222. The controller 680 of the mobile terminal 600 may control display of text 920 corresponding to the response message in the conversation window 900. The controller 270 of the robot cleaner 200 may control execution of the pet mode. That is, the controller 270 of the robot cleaner 200 may control the traveling unit 280 so that the robot cleaner 200 travels about the home. Then, during traveling, the controller 270 of the robot cleaner 200 may control the camera 230 so as to capture images of about the home. Fig.13a exemplarily illustrates traveling of the robot cleaner 200 about the home 10. During such traveling, the camera 230 and/or sensor 18 may be activated and execute image capture. Fig.13b exemplarily illustrates a middle room captured image 1139. The controller 270 of the robot cleaner 200 may compare the captured image 1139 with an image pre-stored in the memory 243 and determine whether or not foreign substances are present based on a difference between the two images.

The controller 270 of the robot cleaner 200 may detect hairs 2406 on the floor in the captured image 1139 and thus judge that foreign substances are present. Upon judging that foreign substances are present, the controller 270 of the robot cleaner 200 may control transmission of the captured image 1139 including the hairs 2406 and related information to a predetermined user mobile terminal 600. If an image 832 including foreign substances in the home and related information 930 are received from the robot cleaner 200 during display of the conversation window 900 of Fig.12, the controller 680 of the mobile terminal 600 may control display of the image 832 including foreign substances and the related information 930, as exemplarily shown in Fig.12. If a user inputs user conversation content "They may be cleaned" 940, the controller 680 of the mobile terminal 600 may judge this content as cleaning execution information (Yes) and control transmission of the cleaning execution information to the robot cleaner 200. The controller 270 of the robot cleaner 200 may transmit response information 950 corresponding to the received cleaning execution information to the mobile terminal 600. Further, the controller 270 of the robot cleaner 200 may control display of the response information 950 corresponding to the cleaning execution information in the conversation window 900. Further, the controller 270 of the robot cleaner 200 may control execution of the cleaning mode corresponding to the cleaning execution information.

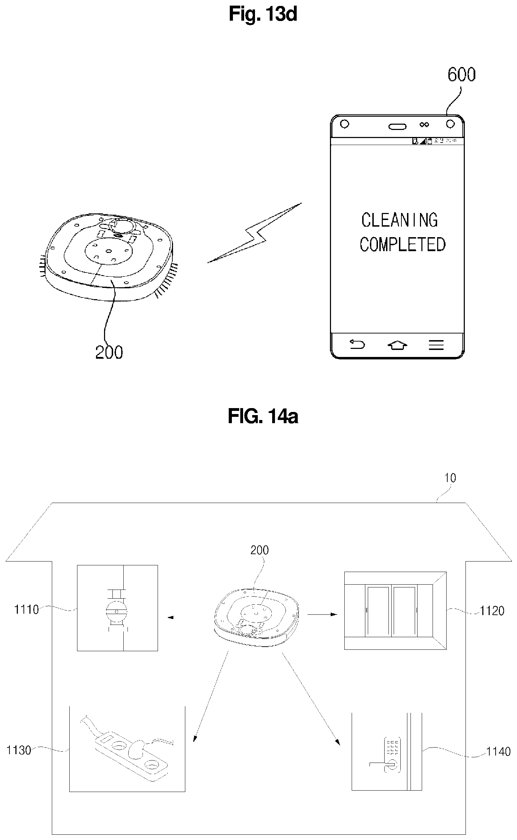

Fig.13c exemplarily illustrates that the robot cleaner 200 moves to an area around the hairs 2406 and the cleaning unit 245 is operated. Thereby, foreign substances may be simply removed. Through the conversation contents on the conversation window, the user may simply execute cleaning of foreign substances, such as hairs, which may be cleaned. Therefore, user convenience may be increased. The controller 270 of the robot cleaner 200 may transmit cleaning completion information to the mobile terminal 600 after cleaning has been completed, as exemplarily shown in Fig.13d. Further, the controller 680 of the mobile terminal 600 may control display of the cleaning completion information, as exemplarily shown in Fig.13d. Thereby, a user may simply recognize completion of cleaning.

The controller 270 of the robot cleaner 200 may control operation of the camera 230 during an automatic traveling mode or an automatic cleaning mode, separately from transmission of the image including foreign substances, compare a captured image in the home with an image pre-stored in the memory 243, and transmit the captured image and alarm information to the mobile terminal 600 if a difference between the two images is a designated value or more.

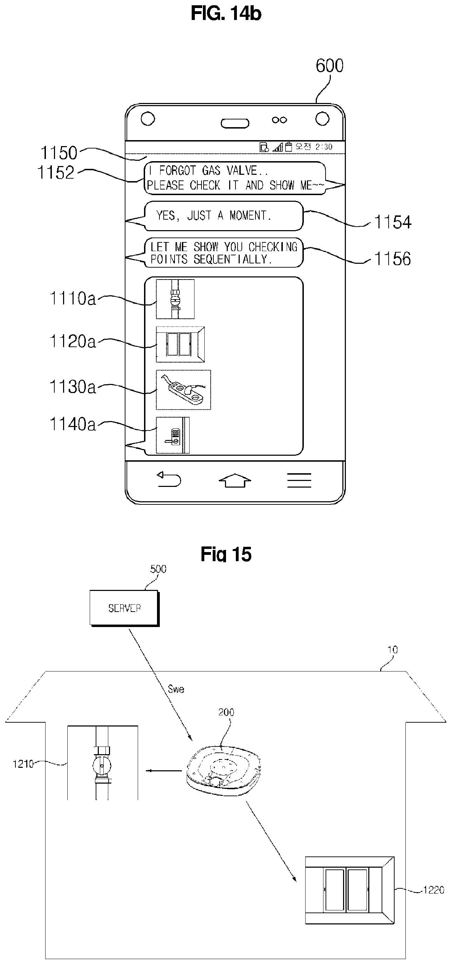

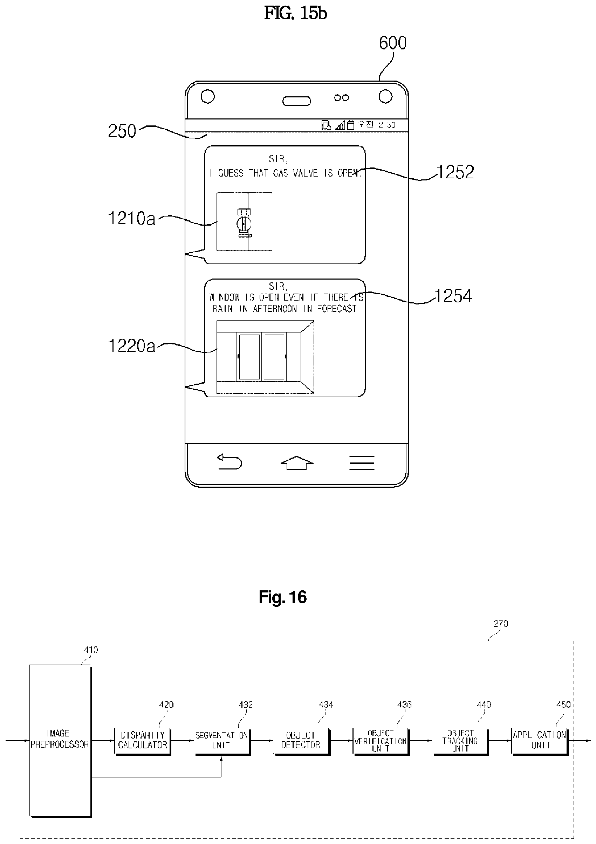

Fig.14a illustrates various exemplary images captured by the robot cleaner 200. With reference to Fig.14a, the robot cleaner 200 may capture a gas valve pipe image 1110, a window image 1120, a consent image 1130, a door image 1140 and the like. For example, the controller 270 of the robot cleaner 200 may capture the gas valve pipe image 1110, the window image 1120, the consent image 1130, the door image 1140 and the like during the automatic traveling mode or the automatic cleaning mode. The controller 270 of the robot cleaner 200 may compare the gas valve pipe image 1110, the window image 1120, the consent image 1130 and the door image 1140 with pre-stored images, and transmit images having differences with the pre-stored images, which are a designated value or more, and corresponding alarm information to the mobile terminal 600. Fig.14b exemplarily illustrates display of a conversation window on the mobile terminal 600. As exemplarily shown in Fig.14b, if text 1152 related to a home checking mode command is input by a user, the controller 680 of the mobile terminal 600 may analyze the text 1152 and transmit the home checking mode command to the robot cleaner 200. The controller 270 of the robot cleaner 200 may receive the home checking mode command and transmit a response message in response to the home checking mode command to the mobile terminal 600, through the communication unit 222. The controller 680 of the mobile terminal 600 may control display of text 1154 corresponding to the response message in the conversation window 1150. The controller 270 of the robot cleaner 200 may control execution of the home checking mode. That is, the controller 270 of the robot cleaner 200 may control the traveling unit 280 so that the robot cleaner 200 travels about the home. Then, during traveling, the controller 270 of the robot cleaner 200 may control the camera 230 so as to capture images of about the home. The controller 270 of the robot cleaner 200 may control transmission of captured images to the mobile terminal 600 without comparison with pre-stored images. For example, the captured images may be the gas valve pipe image 1110, the window image 1120, the consent image 1130 the door image 1140 of Fig.14a. Fig.14b exemplarily illustrates that a checking point guide message 1156, a gas valve pipe image 1110a, a window image 1120a, a consent image 1130a and a door image 1140a are displayed in the conversation window 1150. Thereby, a user may conveniently confirm images set as checking points in the home. The controller 270 of the robot cleaner 200 may receive weather information from the external server 500. Further, the controller 270 of the robot cleaner 200 may control capture of the images set as the checking points in the home based on the weather information received from the server 500. Fig.15a exemplarily illustrates that the robot cleaner 200 receives weather information Swe from the server 500 and captures images of checking points in the home related to the weather information Swe. In more detail, a gas valve pipe image 1210, a window image 1220 and the like may be captured. The controller 270 of the robot cleaner 200 may compare the captured images with pre-stored images and transmit the captured images and related information to the mobile terminal 600 if differences between the captured images and the pre-stored images are a designated value or more. For example, if a gas valve pipe in the gas valve pipe image 1210 is opened or a window in the window image 1220 is opened, the controller 270 of the robot cleaner 200 may compare the captured images with pre-stored images and transmit the gas valve pipe image 1210, the window image 1220 and related information to the mobile terminal 600 if differences between the captured images 1210 and 1220 and the pre-stored images are a designated value or more. Fig.15b exemplarily illustrates display of a conversation window on the mobile terminal 600. As exemplarily shown in Fig.15b, the controller 680 of the mobile terminal 600 may control display of gas valve opening information 1252 and a gas valve pipe image 1210a in a conversation window 1250 based on the gas valve pipe image 1210 and related information. Thereby, a user may simply recognize that a gas valve is opened. Further, the controller 680 of the mobile terminal 600 may control display of window opening information 1254 and a window image 1220a in the conversation window 1250 based on the window image 1220 and related information. Thereby, the user may simply recognize that a window is opened.

The robot cleaner 200 may autonomously generate cleaning execution information or cleaning avoidance information by executing signal-processing of stereo images received from the stereo camera 230 based on computer vision. This will be described with reference to Fig.16 being an exemplary inner block diagram of a controller of Fig.4. With reference to Fig.16, the controller 270 may include an image preprocessor 410, a disparity calculator 420, a segmentation unit 432, an object detector 434, an object verification unit 436, an object tracking unit 440 and an application unit 450. The image preprocessor 410 may receive stereo images from the stereo camera 230 and execute preprocessing of the stereo images. In more detail, the image preprocessor 410 may execute noise reduction, rectification, calibration, color enhancement, color space conversion (CSC), interpolation, camera gain control of stereo images. Thereby, the image preprocessor 410 may acquire clearer stereo images than stereo images captured by the stereo camera 230. The disparity calculator 420 receives stereo images signal-processed by the image preprocessor 410, executes stereo matching of the received stereo images, and acquires a disparity map according to stereo matching. That is, the disparity calculator 420 may acquire disparity information of stereo images in front of the robot cleaner 200. Here, stereo matching may be executed in the unit of pixels or the unit of designated blocks of stereo images. The disparity map may mean a map which numerically expresses binocular parallax information of stereo images, i.e., left and right images. The segmentation unit 432 may execute segmentation and clustering of at least one of the stereo images based on disparity information from the disparity calculator 420. In more detail, the segmentation unit 432 may separate at least one of the stereo images into a background and a foreground based on disparity information. As one example, the segmentation unit 432 may calculate a region having disparity information of a designated value or less in the disparity map as a background and exclude the corresponding region. Thereby, a foreground may be separated. As another example, the segmentation unit 432 may calculate a region having disparity information of a designated value or more in the disparity map as a foreground and extract the corresponding region. Thereby, the foreground may be separated. The segmentation unit 432 may separate a background and a foreground from each other based on disparity information extracted based on stereo images, thus shortening a signal processing speed, a signal processing amount and the like, when an object will be subsequently detected. The object detector 434 may detect an object based on image segmentation from the segmentation unit 432. That is, the object detector 434 may detect an object from at least one of stereo images based on disparity information. In more detail, the object detector 434 may detect an object from at least one of stereo images. For example, the object detector 434 may detect an object from a foreground separated through image segmentation. The object verification unit 436 may classify a separated object and verify the object. For this purpose, the object verification unit 436 may use an identification method using a neural network, a Support Vector Machine (SVM) method, an identification method by AdaBoost using Haar-Like features, or Histograms of Oriented Gradients (HOG) method. The object verification unit 436 may verify a detected object by comparing the detected object with objects pre-stored in the memory 140. For example, the object verification unit 436 may verify a person, an animal, an object and the like located around the robot cleaner 200. The object tracking unit 440 may execute tracking of a verified object. For example, an object in sequentially acquired stereo images may be verified, motion or a motion vector of the verified object may be calculated, and movement of the corresponding object may be tracked based on the calculated motion or motion vector. Thereby, the object tracking unit 440 may track a person, an animal, an object and the like located around the robot cleaner 200. The application unit 450 may generate cleaning execution information or cleaning avoidance information regarding various objects located around the robot cleaner 200. The controller 270 of the robot cleaner 200 may execute a cleaning mode based on cleaning execution information generated within the controller 270 of Fig. 16. Further, the controller 270 of the robot cleaner 200 may not execute the cleaning mode based on cleaning avoidance information generated within the controller 270 of Fig. 16. A robot cleaner and a robot cleaning system having the same in accordance with the present disclosure are not limited to the above-described configurations and methods in accordance with the embodiments. All or some of these embodiments may be selectively combined so that various modifications are possible.

A method of operating a robot cleaner in accordance with the present disclosure may be implemented as code readable by a processor, provided in the robot cleaner, in a recording medium readable by the processor. The recording medium readable by the processor may be any kind of recording device in which data readable by the processor are stored. For example, the recording medium readable by the processor may include a ROM, a RAM, a CD-ROM, a magnetic tape, a floppy disk, and an optical data storage medium. Further, the medium readable by the processor may include a carrier wave, such as data transmission over the Internet. Further, since the recording medium readable by the processor may be distributed to computer systems connected through a network, code readable by the processor in a distributed manner may be stored and executed.

As apparent from the above description, a robot cleaner in accordance with one embodiment of the present disclosure includes a traveling unit configured to move a main body, a cleaning unit configured to execute cleaning, a camera configured to capture an image including foreign substances, a communication unit configured to exchange data with a mobile terminal or a server, and a controller configured to control transmission of the image including the foreign substances and image related information to the mobile terminal or the server and to execute cleaning of an area around the foreign substances based on cleaning execution information regarding the foreign substances or to execute no cleaning of the area around the foreign substances based on cleaning avoidance information regarding the foreign substances, transmitted from the mobile terminal or the server, thus selectively cleaning the foreign substances.

Particularly, the robot cleaner may receive cleaning command information including execution information or avoidance information regarding foreign substances from the mobile terminal or the server and thus selectively clean the foreign substances.

A robot cleaner in accordance with another embodiment of the present disclosure includes a traveling unit configured to move a main body, a cleaning unit configured to execute cleaning, a stereo camera configured to capture an image including foreign substances, a communication unit configured to exchange data with a mobile terminal or a server, and a controller configured to verify an object related to the foreign substances within the image by executing signal-processing of the image including the foreign substances, acquired from the camera, to generate cleaning execution information or cleaning avoidance information regarding the foreign substances based on the verified object related to the foreign substances, and to execute cleaning of an area around the foreign substances based on the cleaning execution information or to execute no cleaning of the area around the foreign substances based on the cleaning avoidance information, thus selectively cleaning the foreign substances.

Particularly, the robot cleaner may autonomously verify an object based on captured stereo images and generate cleaning execution information or cleaning avoidance information regarding foreign substances based on the verified object and thus selectively clean the foreign substances.

Although the preferred embodiments of the present disclosure have been disclosed for illustrative purposes, those skilled in the art will appreciate that various modifications, additions and substitutions are possible, without departing from the scope of the disclosure as disclosed in the accompanying claims.

In one aspect a robot cleaner is provided, comprising: a main body (210): a traveling unit (280) configured to move the main body; a cleaning unit (245) configured to execute cleaning; a controller (270); at least one sensor (180, 190, 195, 230) sensing the floor to be cleaned and providing cleanliness information to the controller (270); a communication unit (222) adapted to transmit cleaning status information to a remote device (600) and to receive cleaning command information from a remote device (600); wherein the controller (270) is adapted to determine whether to stop cleaning operation or whether to continue the cleaning operation based on the cleaning command information.

In some embodiments the cleanliness information can be at least one of: picture, humidity value, metal indication value or smell indication value or a combination thereof.

In some embodiments the sensor can be any one of: an optical sensor (180), a camera (190, 195, 230), a humidity sensor, metal sensor, gas sensor sensitive for methane and/or ammonia or smell sensor.

In some embodiments the controller (270) is further configured to transmit the cleaning status information to the remote device (600) wirelessly connected to the robot cleaner (200) and to receive cleaning command information from the remote device (600).

In some embodiments the cleaning status information includes at least one of: the cleanliness information provided by the sensor (180), a position of the location causing the cleanliness information, a status of a dust container of the robot cleaner (200), a completion cleaning report or status of a battery (199) of the robot cleaner.

In some embodiments the cleaning command information includes a yes or no or includes a location place where to operate the robot cleaner (200) next.

In some embodiments when the controller (270) determines to stop the cleaning operation, the controller (270) is adapted to transmit the cleaning status information and to wait to receive for cleaning command information from the remote device (600), wherein the controller (270) is adapted to continue the cleaning operation when receiving a positive cleaning command information or the controller (270) is adapted not to clean the location where the sensor (180) has sensed the cleanliness information when receiving a negative cleaning command information.

In some embodiments when the controller (270) receives a negative cleaning command information, the controller (270) is adapted to move around the location causing the cleanliness information and to continue the cleaning operation at another location or to stop operation at all.

In some embodiments the robot cleaner (10) includes a front camera (190) and/or bottom camera (195) for capturing images representing cleanliness information.

In some embodiments the controller (180) is adapted to detect a foreign substance on a picture of the front camera and/or bottom camera (190, 195, 230) based on a pattern matching.

In some embodiments in case of a positive pattern matching based on a captured image and/or a gas value for methane and/or ammonia higher than a threshold, the controller (270) is adapted to stop cleaning operation and to transmit the cleaning status information.

In some embodiments the foreign substance recognition and confirmation feature can be activated/deactivated on the robot cleaner (10) and /or via the remote device (600).

In some embodiments when sensing a gas value for methane and/or ammonia higher than a threshold, the controller (270) is adapted to take a picture of the foreign substance and to transmit the picture to the remote device (600).

In another aspect a method for operating a robot cleaner (200) is provided, comprising a main body (210), a traveling unit (280) configured to move the main body; a cleaning unit (245) configured to execute cleaning; a controller (270), a communication unit (222) and at least one sensor (180, 190, 195, 230), the method comprises the steps of: operating the robot cleaner (200), sensing the floor by the at least one sensor (180, 190, 195, 230); determining by the controller (270) whether to stop or whether to continue the cleaning operation based on cleanliness information of the at least one sensor (180); if the controller (270) determines to stop cleaning operation based on the cleanliness information, transmit a cleaning status information to a remote device (600); and receiving cleaning command information from the remote device (600); operating the robot cleaner (200) based on the received cleaning command information.

In another aspect a system for operating an robot cleaner is provided comprising: an robot cleaner (200) as described above and remote device (600) wirelessly connected to the robot cleaner (200), the remote device (600) comprises a display (651) for displaying cleaning status information received from the robot cleaner (200), wherein the remote device (600) transmits a cleaning command information to the robot cleaner (200).

## Claims

1. A robot cleaner (200) comprising:
a traveling unit (280) configured to move a main body;
a cleaning unit (245) configured to execute cleaning;
at least one a camera (230) configured to capture an image including foreign substances or sense the foreign substances;
a communication unit (222) configured to exchange data with a mobile terminal (600) or a server (500);
a controller (270) configured to execute cleaning of an area around the foreign substances based on cleaning execution information regarding the foreign substances or to execute no cleaning of the area around the foreign substances based on cleaning avoidance information regarding the foreign substances; and
a memory (243) connected to the controller (270), and configured to store an image or data,
wherein the memory (243) is configured to store an image or pattern of foreign material which should stop cleaning operation,
**characterized in that** the controller (270) is configured to compare an image captured by the camera (230) with the image stored in the memory (243),
wherein the controller (270) is further configured to:
decide whether to stop or whether to continue the cleaning operation based on the comparison of the image captured by the camera (230) with the image stored in the memory (243), or
control a transmission of the captured image to the mobile terminal (600) or to the server (500) if a difference between the captured image and the stored image is a designated value or more.

2. The robot cleaner according to claim 1, wherein the controller (270) is configured to:
detect a foreign substance in an image captured by the camera (230)
control the memory (243) to store an image or a pattern of foreign material which should stop the cleaning operation.

3. The robot cleaner according to claim 1, wherein the controller (270) is configured to decide whether detected or sensed foreign material is critical or not based on storing image or pattern of foreign material which should stop the cleaning operation.

4. The robot cleaner according to claim 1, wherein the controller (270) is configured to:
transmit cleaning status information to the mobile terminal (600) or the server (500),
receive cleaning command information from the mobile terminal (600) or the server (500), and
provide an adaptive learning process based on processing the cleaning command information.

5. The robot cleaner according to claim 1, wherein the controller (270) is configured to:
detect a foreign substance in an image captured by the camera (230),
receive a cleaning command for continuing the cleaning operation regarding the detected foreign substance from the mobile terminal (600) or the server (500),
after once receiving the cleaning command regarding the detected foreign substance, store the image captured from camera (230) or transmitted status information to the memory (243).

6. The robot cleaner according to claim 1, wherein the controller (270) is configured to:
control transmission of the image including the foreign substances and image related information to the mobile terminal (600) or to the server (500),
execute cleaning of an area around the foreign substances based on cleaning execution information regarding the foreign substances or execute no cleaning of the area around the foreign substances based on cleaning avoidance information regarding the foreign substances, transmitted from the mobile terminal (600) or the server (500).

7. The robot cleaner according to claim 1, wherein the controller (270) is configured to control transmission of a conversation-type message to the mobile terminal (600) or the server.

8. The robot cleaner according to claim 1 or 6, wherein the controller (270) is configured to control transmission of cleaning completion information to the mobile terminal (600), after completion of cleaning of the area around the foreign substances according to the cleaning execution information.

9. The robot cleaner according to claim 1 or 6, wherein the controller (270) is configured to control transmission of response information corresponding to the cleaning avoidance information to the mobile terminal (600).

10. The robot cleaner according to any one of the preceding claims, wherein the controller (270) is configured to control operation of the camera (230) during an automatic traveling mode or an automatic cleaning mode, and to control transmission of the image including the foreign substances and the image related information to the mobile terminal (600) or the server if the image including the foreign substances is acquired from the camera (230).

11. The robot cleaner according to any one of the preceding claims, wherein the controller (270) is configured to control operation of the camera (230) based on an image capture command from the mobile terminal (600) and controls transmission of an image captured by the camera (230) to the mobile terminal (600).

12. A robot cleaning system (50) comprising:
a robot cleaner (200) according to any one of claims 1 to 11; and
a mobile terminal (600) configured to display an image received from the robot cleaner (200) and to transmit cleaning execution information or cleaning avoidance information to the robot cleaner (200) based on the displayed image.

## Patentansprüche

1. Roboterreiniger (200), der Folgendes umfasst:
eine Bewegungseinheit (280), die konfiguriert ist, einen Hauptkörper zu bewegen;
eine Reinigungseinheit (245), die konfiguriert ist, eine Reinigung auszuführen;
wenigstens eine Kamera (230), die konfiguriert ist, ein Bild aufzunehmen, das Fremdstoffe umfasst, oder die Fremdstoffe zu erfassen;
eine Kommunikationseinheit (222), die konfiguriert ist, Daten mit einem mobilen Endgerät (600) oder einem Server (500) auszutauschen;
eine Steuerung (270), die konfiguriert ist, eine Reinigung eines Bereichs um die Fremdstoffe auf der Basis von Reinigungsausführungsinformationen bezüglich der Fremdstoffe auszuführen oder eine Reinigung des Bereichs um die Fremdstoffe auf der Basis von Reinigungsvermeidungsinformationen bezüglich der Fremdstoffe zu vermeiden; und
einen Speicher (243), der mit der Steuerung (270) verbunden ist und konfiguriert ist, ein Bild oder Daten zu speichern,
wobei der Speicher (243) konfiguriert ist, ein Bild oder ein Muster eines Fremdmaterials zu speichern, das den Reinigungsbetrieb stoppen soll,
**dadurch gekennzeichnet, dass**
die Steuerung (270) konfiguriert ist, ein Bild, das durch die Kamera (230) aufgenommen wurde, mit dem Bild zu vergleichen, das im Speicher (243) gespeichert ist,
wobei die Steuerung (270) ferner konfiguriert ist, die folgenden Schritte auszuführen:
Entscheiden auf der Basis des Vergleichs des Bilds, das durch die Kamera (230) aufgenommen wurde, mit dem Bild, das im Speicher (243) gespeichert ist, ob der Reinigungsbetrieb gestoppt oder fortgesetzt werden soll, oder
Steuern einer Übertragung des aufgenommenen Bilds an das mobile Endgerät (600) oder an den Server (500), falls eine Differenz zwischen dem aufgenommenen Bild und dem gespeicherten Bild ein zugewiesener Wert oder mehr ist.

2. Roboterreiniger nach Anspruch 1, wobei die Steuerung (270) konfiguriert ist, die folgenden Schritte auszuführen:
Detektieren eines Fremdstoffs in einem Bild, das durch die Kamera (230) aufgenommen wurde,
Steuern des Speichers (243), ein Bild oder ein Muster des Fremdmaterials zu speichern, das den Reinigungsbetrieb stoppen soll.

3. Roboterreiniger nach Anspruch 1, wobei die Steuerung (270) konfiguriert ist, auf der Basis eines gespeicherten Bilds oder Musters eines Fremdmaterials, das den Reinigungsbetrieb stoppen soll, zu entscheiden, ob das detektierte oder erfasste Fremdmaterial kritisch ist.

4. Roboterreiniger nach Anspruch 1, wobei die Steuerung (270) konfiguriert ist, die folgenden Schritte auszuführen:
Übertragen von Reinigungsstatusinformationen an das mobile Endgerät (600) oder an den Server (500),
Empfangen von Reinigungsbefehlsinformationen vom mobilen Endgerät (600) oder vom Server (500), und
Bereitstellen eines adaptiven Lernprozesses auf der Basis einer Verarbeitung der Reinigungsbefehlsinformationen.

5. Roboterreiniger nach Anspruch 1, wobei die Steuerung (270) konfiguriert ist, die folgenden Schritte auszuführen:
Detektieren eines Fremdstoffs in einem Bild, das durch die Kamera (230) aufgenommen wurde,
Empfangen eines Reinigungsbefehls zum Fortsetzen des Reinigungsbetriebs bezüglich des detektierten Fremdstoffs vom mobilen Endgerät (600) oder vom Server (500),
nach dem Empfangen des Reinigungsbefehls bezüglich des detektierten Fremdstoffs, Speichern des Bilds, das von der Kamera (230) aufgenommen wurde, oder von übertragenen Statusinformationen im Speicher (243).

6. Roboterreiniger nach Anspruch 1, wobei die Steuerung (270) konfiguriert ist, die folgenden Schritte auszuführen:
Steuern der Übertragung des Bilds, das die Fremdstoffe enthält, und von Informationen bezüglich des Bilds an das mobile Endgerät (600) oder an den Server (500),
Ausführen einer Reinigung eines Bereichs um die Fremdstoffe auf der Basis von Reinigungsausführungsinformationen bezüglich der Fremdstoffe oder Vermeiden einer Reinigung des Bereichs um die Fremdstoffe auf der Basis von Reinigungsvermeidungsinformationen bezüglich der Fremdstoffe, die vom mobilen Endgerät (600) oder vom Server (500) übertragen wurden.

7. Roboterreiniger nach Anspruch 1, wobei die Steuerung (270) konfiguriert ist, die Übertragung einer Nachricht vom Konversationstyp an das mobile Endgerät (600) oder an den Server zu steuern.

8. Roboterreiniger nach Anspruch 1 oder 6, wobei die Steuerung (270) konfiguriert ist, die Übertragung von Reinigungsbeendigungsinformationen an das mobile Endgerät (600) nach der Beendigung der Reinigung des Bereichs um die Fremdstoffe in Übereinstimmung mit den Reinigungsausführungsinformationen zu steuern.

9. Roboterreiniger nach Anspruch 1 oder 6, wobei die Steuerung (270) konfiguriert ist, die Übertragung von Antwortinformationen in Übereinstimmung mit den Reinigungsvermeidungsinformationen an das mobile Endgerät (600) zu steuern.

10. Roboterreiniger nach einem der vorhergehenden Ansprüche, wobei die Steuerung (270) konfiguriert ist, den Betrieb der Kamera (230) während einer automatischen Bewegungsbetriebsart oder einer automatischen Reinigungsbetriebsart zu steuern, und die Übertragung des Bilds, das die Fremdstoffe enthält, und der Informationen, die sich auf das Bild beziehen, an das mobile Endgerät (600) oder den Server zu steuern, falls das Bild, das die Fremdstoffe enthält, von der Kamera (230) übernommen wird.

11. Roboterreiniger nach einem der vorhergehenden Ansprüche, wobei die Steuerung (270) konfiguriert ist, den Betrieb der Kamera (230) auf der Basis eines Bildaufnahmebefehls vom mobilen Endgerät (600) zu steuern, und die Übertragung eines Bilds, das durch die Kamera (230) aufgenommen wurde, an das mobile Endgerät (600) steuert.

12. Roboterreinigungssystem (50), das Folgendes umfasst:
einen Roboterreiniger (200) nach einem der Ansprüche 1 bis 11; und
ein mobiles Endgerät (600), das konfiguriert ist, ein Bild anzuzeigen, das vom Roboterreiniger (200) empfangen wurde, und auf der Basis des angezeigten Bilds Reinigungsausführungsinformationen oder Reinigungsvermeidungsinformationen an den Roboterreiniger (200) zu übertragen.

## Revendications

1. Robot nettoyeur (200) comportant :
une unité de déplacement (280), configurée pour déplacer un corps principal ;
une unité de nettoyage (245) configurée pour exécuter un nettoyage ;
au moins un appareil de prise de vues (230) configuré pour capturer une image incluant des substances étrangères ou détecter les substances étrangères ;
une unité de communication (222) configurée pour échanger des données avec un terminal mobile (600) ou un serveur (500) ;
une commande (270) configurée pour exécuter un nettoyage d'une zone autour des substances étrangères sur la base d'informations d'exécution de nettoyage concernant les substances étrangères ou pour n'exécuter aucun nettoyage de la zone autour des substances étrangères sur la base d'informations d'évitement de nettoyage concernant les substances étrangères ; et
une mémoire (243) reliée à la commande (270), et configurée pour stocker une image ou des données,
dans lequel la mémoire (243) est configurée pour stocker une image ou un modèle de matière étrangère qui doit arrêter une opération de nettoyage,
**caractérisé en ce que** la commande (270) est configurée pour comparer une image capturée par l'appareil de prise de vues (230) avec l'image stockée dans la mémoire (243),
dans lequel la commande (270) est en outre configurée pour :
décider s'il faut arrêter ou s'il faut poursuivre l'opération de nettoyage sur la base de la comparaison de l'image capturée par l'appareil de prise de vues (230) avec l'image stockée dans la mémoire (243), ou
commander une transmission de l'image capturée au terminal mobile (600) ou au serveur (500) si une différence entre l'image capturée et l'image stockée est une valeur désignée ou supérieure.

2. Robot nettoyeur selon la revendication 1, dans lequel la commande (270) est configurée pour :
détecter une substance étrangère dans une image capturée par l'appareil de prise de vues (230),
commander à la mémoire (243) de stocker une image ou un modèle de matière étrangère qui doit arrêter l'opération de nettoyage.

3. Robot nettoyeur selon la revendication 1, dans lequel la commande (270) est configurée pour décider si une matière étrangère détectée est critique ou non sur la base de l'image ou du modèle de matière étrangère stocké qui doit arrêter l'opération de nettoyage.

4. Robot nettoyeur selon la revendication 1, dans lequel la commande (270) est configurée pour :
transmettre des informations d'état de nettoyage au terminal mobile (600) ou au serveur (500),
recevoir des informations de commande de nettoyage provenant du terminal mobile (600) ou du serveur (500), et
fournir un processus d'apprentissage adaptatif basé sur le traitement des informations de commande de nettoyage.

5. Robot nettoyeur selon la revendication 1, dans lequel la commande (270) est configurée pour :
détecter une substance étrangère dans une image capturée par l'appareil de prise de vues (230),
recevoir une commande de nettoyage pour poursuivre l'opération de nettoyage concernant la substance étrangère détectée provenant du terminal mobile (600) ou du serveur (500),
après réception de la commande de nettoyage concernant la substance étrangère détectée, stocker dans la mémoire (243) l'image capturée à partir de l'appareil de prise de vues (230) ou des informations d'état transmises.

6. Robot nettoyeur selon la revendication 1, dans lequel la commande (270) est configurée pour :
commander une transmission de l'image incluant les substances étrangères et des informations associées à l'image au terminal mobile (600) ou au serveur (500),
exécuter un nettoyage d'une zone autour des substances étrangères sur la base d'informations d'exécution de nettoyage concernant les substances étrangères ou n'exécuter aucun nettoyage de la zone autour des substances étrangères sur la base d'informations d'évitement de nettoyage concernant les substances étrangères, transmises à partir du terminal mobile (600) ou du serveur (500).

7. Robot nettoyeur selon la revendication 1, dans lequel la commande (270) est configurée pour commander une transmission d'un message de type conversation au terminal mobile (600) ou au serveur.

8. Robot nettoyeur selon la revendication 1 ou 6, dans lequel la commande (270) est configurée pour commander une transmission d'informations de fin de nettoyage au terminal mobile (600), après la fin du nettoyage de la zone autour des substances étrangères en fonction des informations d'exécution de nettoyage.

9. Robot nettoyeur selon la revendication 1 ou 6, dans lequel la commande (270) est configurée pour commander une transmission, au terminal mobile (600), d'informations de réponse correspondant aux informations d'évitement de nettoyage.

10. Robot nettoyeur selon l'une quelconque des revendications précédentes, dans lequel la commande (270) est configurée pour commander un fonctionnement de l'appareil de prise de vues (230) pendant un mode de déplacement automatique ou un mode de nettoyage automatique, et pour commander une transmission, au terminal mobile (600) ou au serveur, de l'image incluant les substances étrangères et des informations associées à l'image si l'image incluant les substances étrangères est acquise à partir de l'appareil de prise de vues (230).

11. Robot nettoyeur selon l'une quelconque des revendications précédentes, dans lequel la commande (270) est configurée pour commander un fonctionnement de l'appareil de prise de vues (230) sur la base d'une commande de capture d'image provenant du terminal mobile (600) et commande une transmission, au terminal mobile (600), d'une image capturée par l'appareil de prise de vues (230).

12. Système de nettoyage par robot (50) comportant :
un robot nettoyeur (200) selon l'une quelconque des revendications 1 à 11 ; et un terminal mobile (600) configuré pour afficher une image reçue du robot nettoyeur (200) et pour transmettre au robot nettoyeur (200) des informations d'exécution de nettoyage ou des informations d'évitement de nettoyage sur la base de l'image affichée.
